# EUROPEAN PATENT APPLICATION

(11) **EP 2 587 767 A2**
(43) Date of publication of application: **01.05.2013**
(21) Application number: 12006973.7
(22) Date of filing: 08.10.2012
(51) Int. Cl.: H04L 29/08, G06Q 10/10, H04W 4/20

(54) **Management of social device interaction with social network infrastructure**

(30) Priority: 08.10.2011 US 201161545147 P; 03.01.2012 US 201213342301; 17.01.2012 US 201213351822; 29.02.2012 US 201213408986; 30.03.2012 US 201213436557; 31.05.2012 US 201213485856
(71) Applicant: Broadcom Corporation, Irvine, CA 92617 (US)
(72) Inventor: Diab, Wael, 94109 San Francisco CA (US); Bennett, James, 36301 Hroznetin (CZ); Kellerman, Marcus, 92127 San Diego CA (US); Rajakarunanayake, Yasantha, 94582 San Ramon CA (US)
(74) Representative: Jehle, Volker Armin

(57) **Abstract**

A social networking system enables interaction between various devices, infrastructures, and the like based upon monitoring, analysis, processing, and the like of information received from devices. Some or all of an infrastructure can monitor information output from one or more socially controllable devices. Upon receiving a trigger or determining a trigger event processing of received data, some or all of the infrastructure, supporting processing systems, and the like can take one or more various responsive actions, including contacting a user associated with the social devices, contacting a third party that is not a member of the social network group, contacting a service that is a member of the group, and controlling or enabling others to control aspects of devices docked with the user's group. A user can manage various levels of authorized interaction between associated devices and a docked social group.

## Description

### CROSS REFERENCE TO RELATED PATENTS/PATENT APPLICATIONS

### Provisional Priority Claim

The present U.S. Utility Patent Application claims priority pursuant to 35 U.S.C. § 119(e) to the following U.S. Provisional Patent Application which is hereby incorporated herein by reference in its entirety and made part of the present U.S. Utility Patent Application for all purposes:
1. U.S. Provisional Patent Application Serial No. 61/545,147, entitled "Social Network Device Memberships and Resource Allocation," (Attorney Docket No. BP23771), filed 10-08-2011, pending.

### Continuation-in-part (CIP) priority claim, 35 U.S.C. § 120

The present U.S. Utility Patent Application claims priority pursuant to 35 U.S.C. § 120, as a **continuation-in-part (CIP),** to the following U.S. Utility Patent Applications which are hereby incorporated herein by reference in their entirety and made part of the present U.S. Utility Patent Application for all purposes:
1. U.S. Utility Patent Application Serial No. 13/342,301, entitled "Social Network Device memberships and Applications," (Attorney Docket No. BP23771), filed 01-03-2012, pending, which claims priority pursuant to 35 U.S.C. § 119(e) to the following U.S. Provisional Patent Application which is hereby incorporated herein by reference in its entirety and made part of the present U.S. Utility Patent Application for all purposes: U.S. Provisional Patent Application Serial No. 61/545,147, entitled "Social Network Device Memberships and Resource Allocation," (Attorney Docket No. BP23771), filed 10-08-2011, pending.
2. U.S. Utility Patent Application Serial No. 13/408,986, entitled "Social Device Resource Management," (Attorney Docket No. BP23776), filed 02-29-2012, pending, which claims priority pursuant to 35 U.S.C. § 119(e) to the following U.S. Provisional Patent Application which is hereby incorporated herein by reference in its entirety and made part of the present U.S. Utility Patent Application for all purposes: U.S. Provisional Patent Application Serial No. 61/545,147, entitled "Social Network Device Memberships and Resource Allocation," (Attorney Docket No. BP23771), filed 10-08-2011, pending.
3. U.S. Utility Patent Application Serial No. 13/436,557, entitled "Social Networking Grouping Hierarchy," (Attorney Docket No. BP23785.1), filed 03-30-2012, pending, which claims priority pursuant to 35 U.S.C. § 119(e) to the following U.S. Provisional Patent Application which is hereby incorporated herein by reference in its entirety and made part of the present U.S. Utility Patent Application for all purposes: U.S. Provisional Patent Application Serial No. 61/545,147, entitled "Social Network Device Memberships and Resource Allocation," (Attorney Docket No. BP23771), filed 10-08-2011, pending.
4. U.S. Utility Patent Application Serial No. 13/351,822, entitled "Ad Hoc Social Networking," (Attorney Docket No. BP23785), filed 01-17-2012, pending, which claims priority pursuant to 35 U.S.C. § 119(e) to the following U.S. Provisional Patent Application which is hereby incorporated herein by reference in its entirety and made part of the present U.S. Utility Patent Application for all purposes: U.S. Provisional Patent Application Serial No. 61/545,147, entitled "Social Network Device Memberships and Resource Allocation," (Attorney Docket No. BP23771), filed 10-08-2011, pending.

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

**1.** Field of the Invention

This invention relates generally to social networking, and more particularly to social network group access, interaction, communication, control, and related services and communications.

2. Related Art

The popularity and growth of social network sites and services has increased dramatically over the last few years. Present social network sites include Facebook, Google+, Twitter, MySpace, YouTube, LinkedIn, Flicker, Jaiku, MYUBO, Bebo and the like. Such social networking (SNET) sites are typically web-based and organized around user profiles and/or collections of content accessible by members of the network. Membership in such social networks is comprised of individuals, or groupings of individuals, who are generally represented by profile pages and permitted to interact as determined by the social networking service.

In many popular social networks, especially profile-focused social networks, activity centers on web pages or social spaces that enable members to view profiles, communicate and share activities, interests, opinions, status updates, audio/video content, etc., across networks of contacts. Social networking services might also allow members to track certain activities of other members of the social network, collaborate, locate and connect with existing friends, former acquaintances and colleagues, and establish new connections with other members.

Individual members typically connect to social networking services through existing web-based platforms via a computing device, tablet or smartphone. Members often share a common bond, social status, or geographic or cultural connection with their respective contacts. Smartphone and games-based mobile social networking services are examples of rapidly developing areas.

In so-called "cloud" computing, computing tasks are performed on remote computers/servers which are typically accessed via Internet connections. One benefit of cloud computing is that may reduce the relative processing and storage capabilities required by user devices (e.g., a cloud computer may load a webpage accessed by a tablet device and communicate only required information back to the tablet). Accordingly, recent years have witnessed an ever-growing amount of content and application software being migrated from local or on-site storage to cloud-based data storage and management. Such software functionality/services and content are typically available on-demand via (virtualized) network infrastructures.

Often, a visitor to a location, network, or the like is granted access to a location, business network, and possibly to a social networking environment, cloud applications, or cloud media content. Such grants are often virtually unlimited in duration and scope. In addition, a social group has a variety of mechanisms for establishing contact with another member, member device, or member device service, including, for example, telephone numbers, IP or other routing addresses, VoIP/video call handles, twitter handles, other SNET handles, blogs, web page addresses, email addresses, etc. When a change to the above occurs, it may be difficult to convey the information to all other members and member devices.

### BRIEF SUMMARY OF THE INVENTION

According to an aspect, a social networking system is provided that supports interactions with a third-party monitoring service and at least a first human member, the social networking system comprising:
a management service that supports creation of a first social networking group, the management service supporting both a first docking process and a second docking process, the first docking process involving associating the first social networking group with a first device of the first human member, the second docking process involving associating the first social networking group with the third-party monitoring service; and
the management service supports a social pathway via the first social networking group through which the third-party monitoring service can receive data from the first device, and the monitoring service selectively triggering a support function in response to the data received, the support function involving an interaction with at least a first portion of the first device by the third-party monitoring service via the social pathway.

Advantageously, the support function involving a control of the first portion of the first device by the third-party monitoring service via the social pathway. Advantageously, the support function involving the third-party monitoring service accessing status information from a first portion of the first device via the social pathway.

Advantageously, the support function involving providing at least some of the status information to a third-party device of a third party.

Advantageously, the social pathway is a direct point-to-point pathway between the third-party monitoring service and the first device.

Advantageously, the monitoring service selectively triggering a support function in response to determining that the data received correlates with a trigger threshold.

According to an aspect, a monitoring system is provided that supports a plurality of customers, the monitoring system comprising:
a first system that interacts with a social network in a first docking process to join at least a first social network group, the first social network group including a first human member and a first social device member of the first human member, the first human member being a first customer of the plurality of customers;
the first system receiving and evaluating communications from the first social device member via a first social pathway provided by the first social network group; and
the first system responds to the evaluation by selectively triggering a support function that involves an interaction with at least a first portion of the first social device member.

Advantageously, the support function involving accessing status information from at least the first portion of the first social device member by the first system.

Advantageously, the support function involving a control of at least the first portion of the first social device member by the first system.

Advantageously:
the first social device includes an audiovisual interface; and
the support function involves a control of the audiovisual interface by the first system.

Advantageously, the support function further involving providing the status information to at least one other customer of the plurality of customers.

Advantageously, the first docking process including a verification of secure interactions between the first system and the first social device member via the first social pathway.

Advantageously, the first system responding to the evaluation by selectively triggering a support function that involves interacting with a third party.

Advantageously, the interacting with a third party including providing communications received by the first system from the first social device member to a third-party device supporting the third party.

According to an aspect, a device is provided that supports a member of a social networking system, the device comprising:
an interface operable to communicatively couple with the social networking system; and
processing circuitry interoperable with the interface to:
   interact with the social networking system in a first docking process to dock the device to a first social networking group, the first social networking group including a third-party monitoring service member; and
   deliver status information associated with a first portion of the device to the third-party monitoring service member via a social pathway provided by the first social network group.

Advantageously, the processing circuitry interoperable with the interface to provide control of the first portion of the device to the third-party monitoring service member.

Advantageously, the first portion of the device includes a sensor operable to generate data based upon an environment proximate to the device.

Advantageously, the processing circuitry interoperable with the interface and the sensor to:
evaluate data generated by the sensor;
in response to the evaluation, deliver status information associated with the sensor to the third-party monitoring service member via a social pathway provided by the first social network group.

Advantageously, the processing circuitry interoperable with the interface and the sensor to respond to a signal from the third-party monitoring service member by delivering status information associated with the sensor to a membership of the first social networking group.

Advantageously, the first docking process including a verification of secure interactions between the device and the third-party monitoring system via the social pathway.

### BRIEF DESCRIPTION OF THE DRAWINGS

FIG. 1 illustrates a schematic block diagram of a social networking grouping hierarchy according to various embodiments of the disclosure;

FIG. 2 illustrates a schematic block diagram of a social networking grouping hierarchy according to various embodiments of the disclosure;

FIG. 3 illustrates a schematic block diagram of a social networking environment according to various embodiments of the disclosure;

FIG. 4 illustrates a schematic block diagram of a social networking environment according to various embodiments of the disclosure;

FIG. 5 illustrates a schematic block diagram of a social networking environment according to various embodiments of the disclosure;

FIG. 6 illustrates a social networking environment according to various embodiments of the disclosure;

FIG. 7 illustrates an appliance social network group/sub-group according to various embodiments of the disclosure;

FIG. 8 illustrates a vehicular social network group/sub-group according to various embodiments of the disclosure;

FIG. 9 illustrates a flowchart according to various embodiments of the disclosure;

FIG. 10 illustrates a flowchart according to various embodiments of the disclosure;

FIG. 11 illustrates a flowchart according to various embodiments of the disclosure;

FIG. 12 illustrates a flowchart according to various embodiments of the disclosure;

FIG. 13 illustrates a social networking environment according to various embodiments of the disclosure;

FIG. 14 illustrates a social network infrastructure and social devices in accordance with various embodiments of the disclosure;

FIG. 15 illustrates a schematic block diagram of an embodiment of a social device according to various embodiments of the disclosure;

FIG. 16 illustrates a schematic block diagram illustrating access to social resources of a social network group/sub-group according to various embodiments of the disclosure;

FIG. 17 illustrates a schematic block diagram of an embodiment of a social device/server incorporating communication and control protocol capabilities according to various embodiments of the disclosure;

FIG. 18 illustrates social device membership and access in social network groups/sub-groups according to various embodiments of the disclosure;

FIG. 19 illustrates remote access to social resources of a social network group/sub-group according to various embodiments of the disclosure;

FIG. 20 illustrates a schematic block diagram of an embodiment of a social device comprising integral resource access and allocation management functionality according to various embodiments of the disclosure; and

FIG. 21 illustrates a social device comprising integral functionality operable to support social network group/sub-group membership and communications according to various embodiments of the disclosure.

### DETAILED DESCRIPTION OF THE INVENTION

As used herein, the terms "social network", "SNET", "social networking system", "social networking infrastructure", and the like, comprise a grouping or social structure of devices and/or individuals, as well as connections, links and interdependencies between such devices and/or individuals. Members or actors (including devices) within or affiliated with an SNET may be referred to herein as "members", "users", "membership", "nodes", "social devices", "SNET members", "SNET membership", "SNET devices", "user devices" and/or "modules". In addition, the terms "social circle", "social group", "SNET circle", "SNET sub-circle", "SNET group", and "SNET sub-group" generally denote an SNET that comprises SNET devices and, as contextually appropriate, human SNET members, device SNET members, personal area networks ("PAN"), and the like.

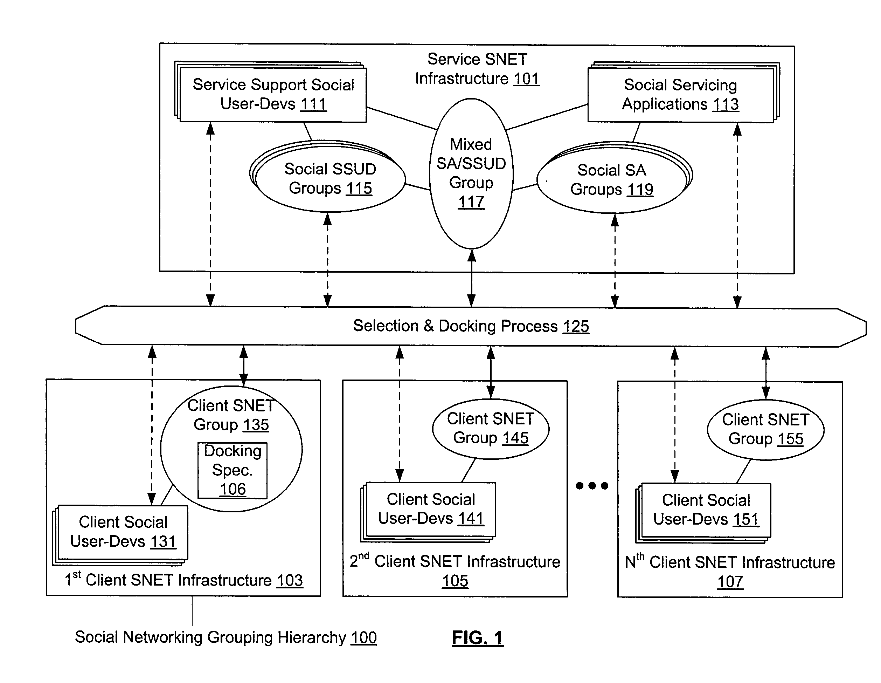

Referring now to FIG. 1, a social networking (hereinafter "SNET") grouping hierarchy 100 according to various embodiments is shown. In some embodiments, a SNET grouping hierarchy 100 includes one or more tiers of SNET infrastructure, encompassed at least in part by an SNET, that can be docked to (hereinafter referred to interchangeably as "associated with", "joined", "combined", and the like) other SNET infrastructure, SNET groups, social devices, and the like. For example, in the illustrated embodiment, one tier of SNET grouping hierarchy 100 can include a service SNET infrastructure 101, and another tier of SNET grouping hierarchy 100 can include one or more client SNET infrastructures 103, 105, and 107. In some embodiments, various tiers can be docked such that a "higher" tier can be docked to "lower" tiers to provide access by "lower" tiers to various capabilities provided by the "higher" tier.

In some embodiments, one or more infrastructures are managed by one or more management systems, processing systems, computers, server devices, network nodes, social devices, some combination thereof, or the like. For example, in the illustrated embodiment, some or all of the service SNET infrastructure 101, one or more client SNET infrastructures 103, 105, and 107, some combination thereof, and the like, may be managed by one or more social service support devices 111, one or more client social devices 131, 141, and 151, one or more management services, some combination thereof, or the like. Processing systems can include, without limitation, one or more instances of processing circuitry distributed across one or more server devices, network nodes, some combination thereof, or the like. In some embodiments, some or all of an SNET can be managed by a management service, which can be supported by one or more processing systems. For example, a management service can manage docking processes between various devices, between various devices and SNET groups, between various SNET groups, some combination thereof, or the like, manage communication pathways, referred to herein interchangeably as "social pathways," between various devices, services, and the like that are docked to various SNET groups, devices, and the like.

For example, in the illustrated embodiment, SNET grouping hierarchy 100 includes a service SNET infrastructure 101 in a first tier, and multiple client SNET infrastructures 103, 105, and 107 in a second tier. Infrastructures can include, without limitation, one or more SNET groups, one or more services, applications, resources, devices, and the like associated with one or more entities, which can include, without limitation, clients, members of an SNET, nonmembers of an SNET, guests of an SNET, some combination thereof, and the like. For example, service SNET infrastructure 101 can include, without limitation, user devices 111, applications 113, and SNET groups 115, 117, and 119 associated, docked, or the like, with one or more services. In some embodiments, an SNET group in one infrastructure can be docked to one or more third-party services, applications, or the like. A client SNET infrastructure 103 can include one or more client SNET groups 135 and one or more social devices 131 associated with one or more particular clients (hereinafter referred to interchangeably as users, members, visitors, guests, and the like). For example, a first client-side infrastructure 103 can include one or more SNET groups 135 associated with an SNET member, along with one or more social devices 131 associated with the SNET member. As shown in the illustrated embodiment, the social devices 131 in a client infrastructure 103 can be docked, associated, joined, and the like with SNET groups associated with the client. At least one process of docking is discussed in further detail in at least U.S. Utility Patent Application Serial No. 13/408,986, entitled "Social Device Resource Management," (Attorney Docket No. BP23776), filed 02-29-2012, incorporated by reference herein in full for all purposes. In some embodiments, a device, SNET group, or the like docked to another SNET group becomes a member of the SNET group to which it is docked. By docking a client social device 131 to a client SNET group 135, a user associated with a client SNET group 135 can interact with the SNET group 135 by interacting with a social device 131 docked to the SNET group 135. Members, clients, users, and the like, as referred to herein, can include, without limitation, human members of an SNET or some other network, device members of an SNET or some other network, some combination thereof, and the like.

In some embodiments, one or more capabilities, which can include, without limitation, various services, applications, SNET groups, some combination thereof, and the like are mixed, combined, merged, some combination thereof, and the like, via a docking process, into one or more SNET groups that can provide access to a desired selection of capabilities through interaction with the one or more SNET groups. For example, service SNET infrastructure 101 illustrates capabilities that can be provided by various service support social user devices 111, various social servicing applications 113, and the like. In some embodiments, access to various service support social user devices 111, either directly, through interaction with a SNET group 115 or SNET group 117 to which the service support social user devices 111 are docked, and access to various social servicing applications 113, either directly, through interaction with a SNET group 119 or SNET group 117 docked to the social servicing applications 113, or the like can be provided to SNET members. One or more of the capabilities provided by the devices 111 and applications 113, SNET groups 115 and 119 docked to the devices 111 and applications 113, some combination thereof, or the like can be combined into a single SNET group that can provide access to one or more capabilities provided by devices, services, applications, SNET groups, some combination thereof, or the like.

For example, a user of a client SNET infrastructure 103 can, by docking a social device 131, via a docking process 125, to a single SNET group 117 that itself combines SNET groups 115 and 119, gain access to the capabilities provided by both SNET groups 115 and 119 by docking with SNET group 117.

In some embodiments, access to capabilities provided by one or more SNET groups, infrastructures, and the like can be accomplished by docking one SNET group to another SNET group. For example, a client SNET group 135 can be docked, via a docking process 125, to SNET group 117, thereby enabling a user of the client-side infrastructure 103 to access the capabilities provided by SNET group 117 through the client SNET group 135. In particular, where one or more social devices 131 are docked to the client SNET group 135, a user can access the capabilities provided by SNET group 117 via one or more of the social devices 131 that are docked with the client SNET group 135. A docking process 125 can include joining client SNET group 135 as a member of SNET group 117, docking (also referred to herein as "associating") client SNET group 135 to SNET group 117 via one of various processes described herein and in at least U.S. Utility Patent Application Serial No. 13/342,301, entitled "Social Network Device memberships and Applications," (Attorney Docket No. BP23771), filed 01-03-2012, U.S. Utility Patent Application Serial No. 13/408,986, entitled "Social Device Resource Management," (Attorney Docket No. BP23776), filed 02-29-2012, incorporated by reference herein in full for all purposes, some combination thereof, or the like.

As an illustration of the above embodiment, a user entering premises including, without limitation, a store, restaurant, hotel, business, public area, and the like may desire to access capabilities including, without limitation, services, applications, information, devices, some combination thereof, and the like provided by an SNET group associated with the premises. Rather than individually dock each of the user's devices with the SNET group, the user can simply dock a personal SNET group, to which the user's devices are docked, with the SNET group associated with the premises, thereby granting the user access to the premises' capabilities through some or all of the devices that the user has docked with his personal SNET group. As a further example, a hotel may provide various capabilities including, without limitation, access to a call routing phone service, control of a particular television device, access to a database, some combination thereof, or the like through an SNET group. Rather than individually dock his personal devices to the hotel's SNET group to utilize the capabilities provided, including, without limitation, docking a smartphone device to the hotel SNET group to utilize the call routing phone service, docking a computer device to the hotel SNET group to control the particular television device, or the like, the guest can simply dock his personal SNET group to the hotel's SNET group and then access the capabilities provided through the hotel's SNET group through a device docked with his personal SNET group.

In some embodiments, docking SNET groups such that a user, member, client, or the like can access capabilities provided by various services, devices, SNET groups, and the like associated with various SNET infrastructures enhances security. For example, where a user associated with a first client SNET infrastructure 103 can only access capabilities provided by service SNET infrastructure 101 by docking with SNET group 117, various levels of security can be utilized by one or more processing systems, devices, and the like associated with the service SNET infrastructure 101, client SNET infrastructure 103, and the like to ensure secure access to the capabilities. In addition, in some embodiments, accessing capabilities provided by an SNET infrastructure by docking two or more SNET groups provides additional levels of security. For example, where access to capabilities provided by service SNET infrastructure 101 entails docking a client SNET group 135, 145, 155, or the like to SNET group 117, a more secure connection, with various levels of security, can be employed, and access to the capabilities can be easily granted, altered, restricted, terminated, and the like via management of a single dock, association, or the like between a client SNET group and SNET group 117. A processing system, device, or the like associated with the service SNET infrastructure 101, client SNET infrastructure 103, or the like can manage the association based upon inputs received from a user, a third-party entity, some internal logic, elapse of a period of time, a change in geographic location of a client social device 131 associated with the client SNET infrastructure 103, some other trigger event, some combination thereof, or the like.

In some embodiments, the selection and docking process 125 can be automated, automatic, some combination thereof, or the like. For example, a docking process may be automatic by being triggered based upon a location of a user of an infrastructure, including, without limitation, a geographic proximity of one or more of a user, a social device 131 associated with a user, a social device 131 docked with a particular client SNET group 135, some combination thereof, or the like. In some embodiments, a user can provide one or more association rules that can provide conditions under which one or more particular client SNET groups 135 can be docked to other SNET groups. Conditions can include, without limitation, geographic proximity of one or more social devices 131 docked to the particular client social 135 to a geographic location associated with an SNET group 117, authorization by a user associated with the infrastructure 103, SNET group 135, social device 131, some combination thereof, or the like to dock the client SNET group 135 with SNET group 117, some combination thereof, or the like. Association rules can be communicated to a social device 131 docked with a particular SNET group 135, a processing system that manages docking of various SNET groups, some combination thereof, or the like. One or more of a processing system, a social device 131, some combination thereof, or the like can monitor a client SNET group 135, social device 131 docked to the client SNET group 135, one or more attributes of another one or more SNET groups 117 in relation to one or more attributes of one or more client SNET groups 135, docked social devices 131, some combination thereof, or the like in relation to one or more association rules in order to determine whether to dock one or more SNET groups, social devices, or the like together. Association rules can be altered by a user, a processing system, some other entity, or the like, on the fly to create new rules, delete rules, alter rules, or the like. For example, a user associated with a client SNET group 135, who may have previously communicated to a processing system an association rule that prohibits docking the client SNET group 135 to an SNET group 117 beyond a threshold geographic proximity to a social device 131, can communicate, on the fly, an alteration of the association rule that can include, without limitation, altering the threshold geographic proximity, authorizing a docking of the client SNET group 135 to a particular SNET group 117 on a case-by-case basis, ordering an undocking of a client SNET group 135 from another SNET group, some combination thereof, or the like.

In some embodiments, various tiers of a SNET grouping hierarchy 100 are subject to various levels of access to information. For example, in the illustrated embodiment, a user of the "higher-tier" service SNET infrastructure 101 may be able to view each client SNET group 135, 145, and 155 associated with a "lower-tier" client SNET infrastructure 103, 105, and 107 that is docked to an SNET group 117 associated with the social service infrastructure 101. A user of the service SNET infrastructure 101 may also be able to view the various social devices 131, 141, and 151 docked to the various client SNET groups 135, 145, and 155. In another example, one or more users of a "lower-tier" infrastructure including, without limitation, client SNET infrastructure 103, 105, and 107 may be able to view some or all of the capabilities provided through an SNET group associated with a "higher-tier" infrastructure to which an SNET group associated with the "lower-tier" infrastructure is docked, but cannot view some or all of the "higher-tier" infrastructure, including, without limitation, various SNET groups 115 and 119 from which capabilities provided by SNET group 117 are originally provided. Additionally, a user of a "lower-tier" infrastructure accessing an SNET group 117 associated with a "higher-tier" service SNET infrastructure 101 may be unable to view some or all of the other similarly "lower-tier" client SNET infrastructures 105 and 107 that are also docked with the same SNET group 117.

In some embodiments, the selection and docking process 125 can be controlled, managed, and the like by one or more various social devices, processing systems, management services, or the like. For example, a processing system of a SNET infrastructure, which can include one or more instances of processing circuitry distributed across one or more server devices, network nodes, some combination thereof, or the like, may control the docking and undocking of one SNET group to another, based upon a user's interaction with the SNET, one or more association rules, one or more inputs, some internal logic, some combination thereof, or the like. As another example, a social device may control the docking and undocking of one or more SNET groups based upon a user's interaction with the SNET, one or more association rules, one or more inputs, some internal logic, some combination thereof, or the like. In some embodiments, a processing system, social device, some combination thereof, or the like authorized to manage a "higher tier" infrastructure can manage one or more attributes of access by one or more "lower-tier" infrastructures docked to the "higher-tier" infrastructure. For example, a processing system authorized to control a "higher-tier" social service infrastructure 101 may alter access to certain capabilities, restrict access to certain capabilities, terminate access via undocking of SNET groups and devices, some combination thereof, or the like based upon input, or some other logic. The processing system may determine that a trigger event including, without limitation, all social devices 131 docked with a client SNET group 135 docked to SNET group 117 have exceeded a predetermined threshold geographic proximity distance from a geographic location associated with SNET group 117 and, based upon the determination, undock the client SNET group 135 from SNET group 117, partially or fully restrict access by client SNET group 135 to certain capabilities provided by SNET group 117, some combination thereof, or the like.

In some embodiments, various SNET groups are created by some part of an SNET infrastructure including, without limitation, a management service, based upon on an input from a user, member, processing system, device, SNET, SNET group, some combination thereof, or the like. For example, where SNET infrastructure 103 is associated with an SNET member account, a member of the account may provide input to the SNET infrastructure 103 to create SNET group 135. The input can include, without limitation, attributes of the group 135, social devices 131 to be docked with the group 135, information to be accessible to one or more members of group 135, some combination thereof, or the like.

In some embodiments, an SNET group in an SNET infrastructure is docked with another SNET group. For example, in the illustrated embodiment, SNET group 135 is docked with SNET group 117 via a docking link. Docking one SNET group to another SNET group can be accomplished via one or more various docking processes including, without limitation, sole initiation of docking by one or more devices, SNET groups, or the like.

In some embodiments, a docking process can include interactions between at least some of both a first SNET group and a second SNET group. For example, where SNET group 135, application 113, or the like is to be docked to SNET group 117 via a docking link, SNET group 135, application 113, and SNET group 117 may exchange security information processing, and the like with reference to one or more members, docked devices, functional elements, accessible information, some combination thereof, or the like between the two SNET groups. Such exchanges can enable additional security verifications of appropriate interactions and access between the two SNET groups, their respective members, and the like. In some embodiments, additional security processes, such as human confirmation requirements, are employed to ensure secure interactions between capabilities of one or more docked SNET groups, devices, members, and the like.

In some embodiments, a docking process can include various actions performed by one or more of an SNET, SNET system, SNET infrastructure, processing system, SNET group, social device, user, member, some combination thereof, or the like that can include, without limitation, verifying an optimal docking location, arranging a presentation of docking links to a user, member, or the like. For example, where a user associated with SNET infrastructure 103 interacts with SNET infrastructure 103 to dock SNET group 135 to some part of SNET infrastructure 101 to access various capabilities of SNET groups included in SNET infrastructure 101, a docking process to associate, dock, or the like SNET group 135 with another SNET group in SNET infrastructure 101 can include, without limitation, determining an optimal docking configuration between SNET group 135 and one or more various SNET groups in SNET infrastructure 101 to enable access by a member of SNET group 135 to certain one or more capabilities of SNET infrastructure 101. As shown in the illustrated embodiment, SNET group 135 can be docked with both SNET group 117, via a first docking link, and SNET group 115 via a second docking link, as part of a single docking process to associate SNET group 135 with certain capabilities provided by various SNET groups in SNET infrastructure 101, where the optimum docking configuration is determined to include, without limitation, docking SNET group 135 to both SNET group 117 and SNET group 115 to access the capabilities. The various docking links can be governed by a single docking specification, some other combination of docking specifications that are part of one or more of SNET infrastructures 101 and 103, management services, some combination thereof, or the like. In some embodiments, docking links and docking specifications can be docked, associated, or the like in one-to-one type relationships, one-to-many type relationships, many-to-one type relationships, some combination thereof, or the like.

In some embodiments, a docking process that associates SNET group 135 with certain capabilities of SNET infrastructure 101 via docking with both SNET group 117 and SNET group 115 may include arranging a presentation of the docking links so that a member accessing the capabilities does not see a full complexity of the docking links, interactions, and the like between various SNET groups, devices, SNET infrastructures, and the like. In the illustrated embodiment, for example, a docking process for docking SNET group 135 with SNET groups 117 and 115 may include arranging a presentation, representative view, or the like of the capabilities of SNET group 117 that can be accessed by a member of SNET group 135 to hide the fact that SNET group 117 is docked, via two docking links, to two SNET groups 115 and 119. A simplified presentation, representative view, or the like, may present only a view of SNET group 117 being docked with certain capabilities of SNET infrastructure 101. In some embodiments, a member can adjust, toggle, or otherwise manipulate the complexity of the presentation, representative view, or the like such that a partial or full view of the complexity of the docking links, interactions, and the like between the SNET infrastructures, SNET groups, social devices, and the like is presented to a member.

In some embodiments, establishing multiple docking links can provide additional security for access to certain capabilities. For example, where a docking link between SNET group 135 and SNET group 117 provides a docking link with a higher-security link to a certain capability than a docking link to SNET group 115, an indirect link to SNET group 115, some combination thereof, or the like, the docking process may include establishing a docking link to provide a more secure link to a certain capability than a link used to access another capability. In some embodiments, establishing multiple docking links can provide more efficient access to capabilities, services, and the like than a single docking link. For example, where a docking process includes a determination that a docking link to both SNET group 117 and SNET group 115 can enable a more efficient access to certain capabilities of SNET infrastructure 101 than a single docking link, a docking process can include, without limitation, establishing multiple docking links to SNET groups of SNET infrastructure 101.

In some embodiments, a docking link between various SNET groups, social devices, and the like is managed based on various docking specifications. A docking specification can, in some embodiments, manage one or more particular docking links and set forth, for example and not by way of limitation, access limitations, restrictions, grants, and the like associated with various capabilities of an SNET group, security access requirements, periods of access, trigger events upon which access is to be altered, restricted, granted, terminated, or the like. For example, as shown in the illustrated embodiment, SNET group 135 can include a docking specification 106 that governs the docking link between SNET group 135 and SNET group 117. A separate docking specification included in group 135 can, in some embodiments, govern a docking link between SNET group 135 and SNET group 115, SNET group 135 and device 131. Some combination thereof, or the like. A docking specification can be predetermined, in part or in full, by a member of SNET group 135 in advance of a docking, created on the fly as part of a docking process to dock SNET group 135 to another SNET group, provided by the SNET infrastructure 103, an SNET group that attempts to dock with SNET group 135, some combination thereof, or the like. For example, a member of SNET group 135 may establish docking specification 106 that restricts access by members of SNET group 117 to capabilities provided by SNET group 135, one or more devices 131 docked with group 135, or the like based upon a later trigger event including, without limitation, elapse of a period of time, member authorization of access, some combination thereof, or the like. In some embodiments, a docking specification is specific to certain attributes of other SNET groups and devices, such that the SNET group 135 is docked to various SNET groups with correlating attributes. For example, docking specification 106 may dictate that SNET group 135 is to be docked, via a docking link, to an SNET group 117 that is associated with a geographic location that is within a predetermined threshold proximity to a geographic location associated with SNET group 135, and that the docking link to SNET group 117 is to be restricted, terminated, or the like if the geographic location associated with SNET group 117 ever exceeds the proximity threshold.

In some embodiments, some or all of a docking specification can be adjusted, managed, altered, created, deleted, or the like based upon an input from a user, member, SNET system, SNET infrastructure, docked device, docked SNET group, some combination thereof, or the like. For example, a member of SNET group 135 may establish a docking specification 106 to govern docking links with one or more SNET groups 117, 115, and 119 to restrict access by a member of SNET groups 115, 117, 119, 145, and 155 to certain capabilities of SNET group 135, devices 131 docked with SNET group 135, and the like, and then interact with SNET group 135, SNET infrastructure 103, some combination thereof, or the like, to alter docking specification 106 to provide greater access by a member of SNET group 117, a member of a group 145 docked to SNET group 117, or the like to capabilities provided by SNET group 135, one or more devices 131 docked to SNET group 135, some combination thereof, or the like. Such management of a docking specification can be performed at any time, on the fly, in an ad hoc process, or the like with regard to an existing docking link, a docking specification governing potential docking links, some combination thereof, or the like.

In some embodiments, a docking specification governing a docking link between a "higher-tier" SNET group and a "lower-tier" SNET group is part of the higher-tiered SNET group. For example, in the illustrated embodiment, where SNET group 117 is a higher-tiered SNET group and SNET groups 135, 145, and 155 are lower-tiered SNET groups, the docking links between the lower-tiered SNET groups 135, 145, and 155 and the higher-tiered SNET group 117 are governed by docking specifications that are part of the higher-tiered SNET group 117, thereby enabling control by a higher-tiered SNET group over docking links with lower-tiered SNET groups.

In some embodiments, a docking specification can be tailored by a user, member, SNET system, SNET infrastructure, SNET group, social device, some combination thereof, or the like to provide various levels of interaction and access between various docked SNET groups. For example, in the illustrated embodiment, docking specification 106 may dictate that a docking link with SNET group 117 provides full bi-directional interactions, sharing of information, services, and the like between one or more of SNET groups 135 and 117, one or more devices 131 docked with SNET group 135, some combination thereof, or the like, that are linked via the docking link. In another example, docking specification 106 may dictate that a docking link provides a one-way group-to-group service access between SNET group 135 and SNET group 117 via the docking link, such that a member of SNET group 135 can access at least some services provided by capabilities of SNET group 117, but a member of SNET group 117, a member of a group 145, 155, and the like docked to group 117, and the like cannot access some or all information, services, devices, or the like associated with SNET group 135. For example, where a hotel guest's SNET group is docked with a hotel's SNET group to grant the hotel guest access to hotel service capabilities via the hotel's SNET group, a docking specification governing the docking link between the hotel guest's SNET group and the hotel's SNET group may specify that the hotel guest is restricted from accessing certain capabilities of the hotel's SNET group, while the hotel's SNET group is restricted from accessing any of the capabilities of the hotel guest's SNET group including, without limitation, access to devices docked to the hotel guest's SNET group. In another example, where a first neighbor's SNET group is docked with a neighborhood watch group, and the first neighbor's security camera devices, motion detectors, and the like are docked with the first neighbor's SNET group, the first neighbor may grant limited or no access by members of the neighborhood watch SNET group to data generated by the first neighbor's security devices, but the first neighbor may later alter the docking specification to allow access by members of the neighborhood watch group to some or all data generated by some or all of the first neighbor's security devices, to route data generated by some or all of the first neighbor's security devices to the neighborhood watch group for access, monitoring, analysis, or the like. As discussed above, such access and interaction aspects of a docking specification can, in some embodiments, be altered at any time by various users, members, SNET groups, SNET infrastructures, and the like.

In some embodiments, a docking specification places certain restrictions on capabilities of an SNET group that are provided, offered, or the like to members of docked SNET groups. For example, docking specification 106 may dictate that only certain capabilities of SNET group 135 are to be provided to a member of SNET group 135 via one or more links with SNET group 117. Docking specification 106 may also dictate that each member of SNET groups 135, 145, and 155 be provided with a distinct access to a distinct one or more capabilities of SNET group 117. For example, docking specification 106 may dictate that each member of SNET groups 135, 145, and 155 be provided a unique access to one or more capabilities of SNET group 117.

In some embodiments, a docking link between various SNET groups enables access by additional SNET groups to capabilities provided by SNET groups to which additional SNET groups are indirectly associated, docked, or the like. For example, in the illustrated embodiments, where SNET group 145 is docked to SNET group 117 via a docking link, SNET group 145 can be docked to SNET group 135 via docking links between SNET group 135, 117, and 145. One or more docking links are governed by docking specification 406 in SNET group 135. In some embodiments, a member of SNET group 145 may be granted access to at least some capabilities of SNET group 135 to which a member of SNET group 117 is granted access. Access to capabilities of SNET group 135 by a member of SNET group 117 can be determined by various docking specifications including, without limitation, docking specification 406 that governs the docking link between SNET group 135 and SNET group 117, and one or more docking specifications that govern docking links between SNET group 117 and one or more SNET groups 135, 145, and 155. For example, docking specification 106 may grant access by a member of SNET group 135 to certain capabilities of SNET group 135 via docking links with SNET group 117 by restricting access to capabilities of SNET group 135 by a SNET group that is docked to SNET group 117. In another example, docking specification 406 may specify that a member of SNET group 117 may access none, some, all, or the like of the capabilities of other SNET groups including, without limitation, devices 131 to which SNET group 135 is docked.

In addition to various docking specification limitations applying to local group offerings, various docking specification limitations may also apply to chained offerings. For example, the SNET Group 135 may freely provide access by any other SNET group, via a direct docking link to SNET group 117, via an indirect link via a docking link to an SNET group that is docked to SNET group 117, some combination thereof, or the like, to all offerings including, without limitation, services, content, data, access to docked devices 131, some combination thereof, or the like. Such freely-provided access can be defined, in some embodiments, via the docking specification 106. However, the docking specification 406 may place restrictions on access via SNET group 117 including, without limitation, not permitting any access, knowledge of, or the like with regard to some or all offerings from any external SNET group to which SNET group 135 is docked including, without limitation, one or more of SNET Groups 145 and 155. In this way, depending on the docking linkage and chained SNET groups and device specifications, offerings may be managed in various ways depending on underlying needs. In some embodiments, such linkages and chain management of overall offerings apply twice: one for each direction of access. For example, offering restrictions associated with the SNET infrastructure 103 can be completely different from those of the SNET infrastructure 105. In addition, even though all relevant docking specifications within the SNET infrastructure 101 may permit at least limited access to a particular offering to SNET groups docked to SNET group 117, such access may not extend to, for example, docked devices 131 and SNET group 135 due to: a) the docking specification 106 placing further access restrictions beyond those required by the SNET infrastructure 101, b) a relevant docking specification within the SNET infrastructure 101 may limit foreign linkages, some combination thereof, or the like.

For example, in an ad hoc travel network docking configuration, a personal SNET group construct of a traveler (e.g., the SNET infrastructure 103) might desire to provide very limited access to a hotel's SNET group construct (e.g., the SNET infrastructure 101), while in the other direction the hotel's SNET group construct offerings may be freely provided. Each construct need only provide access to whatever offerings, membership identification, information, and the like that they would like to expose. A traveler may choose to expose, for example, a) a payment service element located somewhere within the overall personal SNET group construct, b) the traveler's social smartphone's incoming message service; c) an administrator's incoming message service; d) a travel document storage service; some combination thereof, or the like, while the hotel may choose to expose capabilities, offerings, and the like including, without limitation, 1) a regional directory, a map and other information services; 2) a concierge service; 3) a billing service; 4) a reservation service; 5) networked office equipment; some combination thereof, or the like. Exposure in either case can be defined, for example, via various docking specifications associated with the originating SNET group as modified by the docking specifications associated with the SNET groups in the chain pathway to the destination.

In another example, a personal SNET group construct of a neighbor (e.g., the SNET infrastructure 103) might desire to provide very limited access to a neighborhood watch SNET group construct (e.g., the SNET infrastructure 101), while in the other direction the neighborhood watch SNET group construct offerings may be freely provided. Access provided by the neighbor can include access to data generated by various devices 131 associated with the neighbor including, without limitation, security devices, monitoring devices, and the like.

In some embodiments, docking specifications can be extended to provide resolution beyond that of a group level. For example, the docking specification 106 may require human identification, various levels of security verification, some combination thereof, or the like before providing access, including even offering identification, via a docking link. In another example, as defined by the docking specification 106, a traveler, which can be a member of the SNET Group 135, may gain access to a particular offering provided by one element, service or device participant in the SNET Group 145 via a required secure interaction with the traveler's local social smart phone 141 docked to SNET group 145, but some or all other members of SNET group 155, other SNET groups, or the like may not gain access to the particular offering. In other words, for one or more particular SNET group offerings, capabilities, offering identifiers, and the like, and for one or more particular group members, membership information, and the like, particular chained docking specification details can be established to manage overall access, including, without limitation, limited access. So, although shown functionally as being distributed, being associated with each link, and the like, chained docking specification flow can be managed by a single user interface, and may be stored in a single database construct.

In some embodiments, default docking specifications can apply a default treatment of offerings, access, interactions, or the like with regard to one or more particular SNET groups, but permit specific offering modifications, other access modifications, some combination thereof, or the like where needed by authorized members, devices, SNET systems, SNET groups, SNET infrastructures, some combination thereof, or the like. Likewise, overall default treatment can be modified, as well.

In some embodiments, a docking specification can be part of one or more SNET groups, SNET infrastructures, social device, some other entity, some combination thereof, or the like. For example, where a docking process to dock SNET group 135 to SNET group 117 is initiated by a device 131 docked to SNET group 135, docking specification 106 may be a part of SNET group 135. In addition, where a docking process to dock SNET group 135 to SNET group 117 includes some part of SNET infrastructure 101 receiving and granting a docking request from some part of SNET infrastructure 103, docking specification 106 may be a part of SNET group 117. In some embodiments, a docking request can include, without limitation, a request to dock one SNET group to another SNET group, a request to dock a device to an SNET group, a request to provide a first SNET group's capabilities, including without limitation services, access to devices, applications, and the like, to one or more devices docked to a second SNET group. A docking request can originate from a device docked to the first SNET group, a device docked to the second SNET group, a member of the first SNET group, a member of the first SNET group, a third-party, some combination thereof, or the like.

By docking to SNET group 117, SNET group 135 may access some or all of the capabilities of SNET group 115 and SNET group 119, as specified by one or more docking specifications in infrastructure 101; conversely, where SNET group 135 docks with SNET group 117, SNET group 117 may access some or all of the capabilities of SNET group 135, as specified by docking specification 106.

In some embodiments, docking various SNET groups with various SNET groups in various SNET infrastructures can include various access restrictions and limitations. For example, where SNET group 115 is docked to SNET group 117, which is docked to SNET group 119, all within SNET infrastructure 101, various levels of interaction and access by the various SNET groups can be determined via management of the various docking specifications governing the docking links. All three docked SNET groups 115, 117, and 119 can be enabled to have access to some or all of each other's capabilities, SNET group 117 may have access to capabilities of SNET group 115, SNET groups 117 and 115 may have access to each other's capabilities while SNET group 117 has access to some of the capabilities of SNET group 119, some combination thereof, or the like. Such interactions, access, dockings, and the like may be performed without any interaction with a third-party entity, third-party SNET group, or the like.

In some embodiments, where a third-party entity, third-party SNET group, or the like is involved in a docking link, additional interaction with third-party entity, third-party SNET group, or the like is required. For example, where one or more devices 131 are to be docked to SNET group 117, docking, access, or the like may require interaction with one or more SNET groups 135 via a third device, which may be a part of infrastructure 103. In some embodiments, a docking process between SNET groups associated with separate SNET infrastructures, users, members, or the like can be initiated, managed, or the like by various devices, processing systems, SNET systems, SNET infrastructures, or the like. For example, a docking between a first device 131, SNET group 135, or the like and SNET group 117 may be initiated, managed, or the like by one or more other devices 131 docked to SNET group 135, one or more devices docked to SNET group 117, one or more devices docked to a third-party SNET group, one or more processing systems, one or more SNET infrastructures, some combination thereof, or the like.

In some embodiments, a capability provided by one or more SNET groups, infrastructures, and the like includes services, devices, or the like that access, interact with, or the like with one or more devices, SNET groups, or the like to which the one or more SNET groups are docked. For example, in the illustrated embodiment, service SNET infrastructure 101 can include one or more social servicing applications 113 that monitor and analyze data associated with one or more client social user devices 131 that is docked, directly, indirectly through a docked client SNET group 135, or the like, with SNET group 117. Such monitoring and analyzing can include, without limitation, receiving data generated, collected, or the like by some sensor, component, functional element, or the like of one or more social devices, devices controlled by a social device, devices in communication with a social device, some combination thereof, or the like. In some embodiments, a social servicing application 113 receives data from a user device 131 docked directly, indirectly via docked group 135, or the like with group 117, where the data is related to some part, functional element, sensor, or the like associated with device 131, another device linked to the device 131, some combination thereof, or the like. The data can be requested from device 131, acquired via accessing device 131 through a link with SNET group 117, provided by device 131 as provided by one or more docking specifications in one or more of infrastructures 103 and 101, or the like. Access to the data may be authorized by a docking specification; in some embodiments, one or more entities can alter the docking specification to restrict, enable, terminate, authorize, or the like according to predetermined trigger events, trigger conditions, on the fly, or the like.

In some embodiments, monitoring data includes comparing the data against information to determine if the data correlates with one or more thresholds. For example, social servicing application 113 can monitor data from device 131 by determining whether the data correlates with information stored locally, in infrastructure 101, a third-party infrastructure, one or more third party devices, some combination thereof, or the like. Analyzing data can include, without limitation, one or more of assembling, comparing, or the like of data received from one or more devices, SNET groups, or the like to identify trends of data, determine whether data from one or more sources correlate with a predetermined one or more trigger events, some combination thereof, or the like. For example, an application 113 can collect data from devices 131, 141, and 151 that relate to multiple separate motion detectors and analyze the data to track movement across a geographic area. In another example, where one or more of the devices 131, 141, and 151 includes a camera device that can generate images of items and a GPS beacon, and application 113 collects, from the devices 131, 141, and 151, images and GPS coordinates corresponding to when and where the images were taken, application 113 can include a monitoring and analysis system, monitoring system, analysis system, monitoring and analysis service, monitoring service, analysis service, or the like that can identify a particular item in the images that correlates with certain information and then analyze the data to track the item across a geographic area and the passage of time.

In some embodiments, one or more capabilities provided by a first SNET group include the ability to access one or more capabilities of a device, second SNET group, or the like to which the first SNET group is docked. Such access can be based upon monitoring, analysis, and the like of data received by one or more capabilities provided by the first SNET group. For example, in the illustrated embodiment, where an application 113 monitors data from one or more docked SNET groups 135, 145, and 155, one or more devices 131, 141, and 151, some combination thereof, or the like, the application 113 can respond to certain inputs, triggers, or the like by interacting with one or more of the devices, a third-party entity, some combination thereof, or the like. A third party device can include a predetermined device, SNET group, account, or the like identified by a user associated with a device from which at least some data is received, internal logic associated with one or more infrastructures, SNET groups, or the like. For example, an application may respond to determining that data from one device 131 correlates with exceeding a trigger threshold by accessing, communicating, interacting with, or the like with one or more devices 141, a third-party SNET group, device, member, or the like that has been predetermined by the application 113, some other member, device, entity, or the like. In some embodiments, the application can, having received data from one of a user's devices, respond by interacting with another of the user's devices. For example, an application 113, having received data from a device 131 docked to group 135 that is a sensor device generating data related to an environment proximate to one or more devices 131, respond by collecting additional data from the sensor, request data from another separate device 131 docked to group 135, communicate a signal to a separate device 131 that has a user interface, interact with a third-party device, perform an analysis of data collected from multiple devices to track a data trend, some combination thereof, or the like.

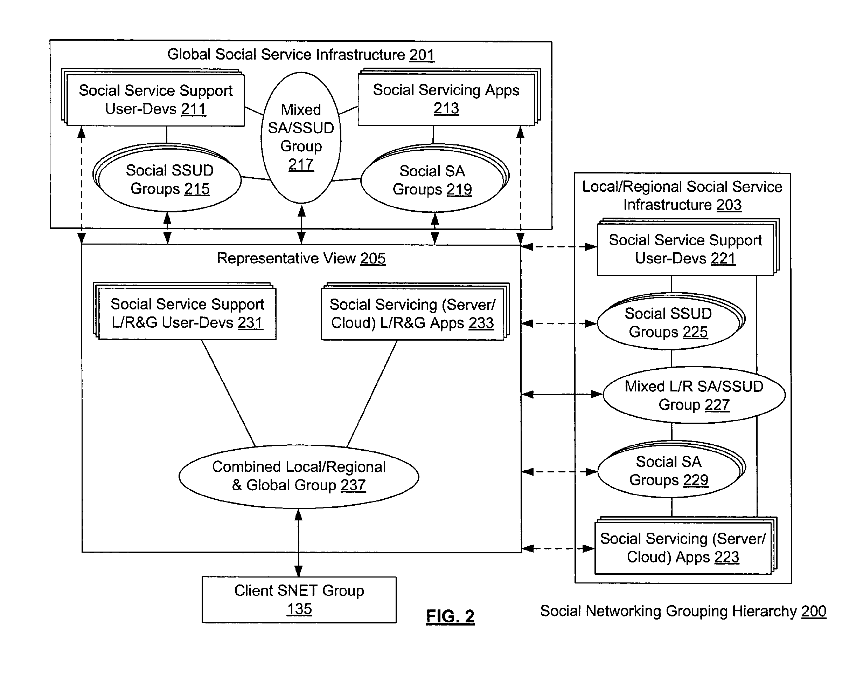

Referring now to FIG. 2, some embodiments of an SNET grouping hierarchy 200 can enable a client SNET group 135 to dock to an SNET group that provides capabilities from various infrastructures. In the illustrated embodiment, two infrastructures 201 and 203 are combined, docked, associated, or the like to provide capabilities from both infrastructures 201 and 201 through a single combined SNET group 237. The global social service infrastructure 201 includes capabilities provided by social service support user devices 211, social servicing apps 213, and various SNET groups 215, 219, and 217 that provide some combination of the capabilities provided by the infrastructure 201. In addition, the local/regional social service infrastructure 203 also includes capabilities provided by social service support user devices 221, social servicing apps 223, and various SNET groups 225, 229, and 227 that provide some combination of the capabilities provided by the infrastructure 203. The combined local/regional and global SNET group 237 provides a combination of the capabilities provided by the social service support user devices 211 and 221 and the social servicing apps 213 and 223 provided by both infrastructures 201 and 203. Where client SNET group 135 can be docked with SNET group 237, a member of client SNET group 135 will be able to access the capabilities provided by both infrastructures by docking a single client SNET group with a single SNET group 237.

In some embodiments, a representative view 205 provided to a member of client SNET group 135 accessing the capabilities provided by SNET group 237 includes only the combined capabilities provided by both infrastructures 201 and 203 independently of some or all indications of the infrastructure from which some or all of the capabilities are originally provided. In the illustrated embodiment, for example, the capabilities provided by the social service support user devices 231 and 221 from both infrastructures 201 and 203 are presented in the representative view 205 as a combined set of social service support user devices 231; likewise, the social servicing apps 213 and 223 from both infrastructures 201 and 203 are presented in the representative view 205 as a combined set of social servicing apps 233. In addition, all of the SNET groups 215, 217, 219, 225, 227, and 229 in the infrastructures that are partially or fully combined, via one or more docking processes, into SNET group 237 may be partially or fully transparent to a member accessing a representative view 205 of the capabilities provided by SNET group 237. In some embodiments, a member accessing representative view 205 can restore the full complexity of the combination of infrastructures 201 and 203 in representative view 205, such that the member can view the various SNET groups and capabilities specific to various infrastructures and provided capabilities.

As an example of the illustrated embodiment, a hotel chain may provide a global SNET infrastructure 201 that provides capabilities common to all hotels in the franchise, such as a global media database, corporate contact information, information databases, some combination thereof, or the like. In addition, a certain local hotel may desire to have a local SNET infrastructure 203 that provides access to local entertainment, dining, news information, device access specific to the local hotel, some combination thereof, and the like. The hotel may desire to combine the hotel chain's capabilities provided by the global SNET infrastructure 201 with the location-specific capabilities provided by the local SNET infrastructure into a combined SNET group 237, to enable a hotel guest to access global and local capabilities with a single docking process and via a single representative 205 that provides global and local capabilities partially or fully combined.

In some embodiments, combinations of capabilities provided by separate infrastructures are managed, in part or in full, by one or more processing systems, social devices, members, applications, some combination thereof, or the like that are associated with one or more infrastructures. For example, in the illustrated embodiment, a processing system associated with the local SNET infrastructure 203 may manage the combination of capabilities from infrastructures 201 and 203 into SNET group 237, manage docking of client SNET groups 135 with the SNET group 237, some combination thereof, or the like.

In some embodiments, access to an SNET group 237 by a client SNET group 135 can be granted, restricted, terminated, or the like by a network manager, processing system, social device, some combination thereof, or the like, according to an input, a trigger event, some other internal logic, or the like. For example, when a social device docked with a client social device 135 leaves a premises associated with an SNET group 237, the client SNET group's 135 access to capabilities provided by SNET group 237 may be terminated by terminating or restricting access granted by the docking, changing authorization to interact with some or all capabilities provided by SNET group 237, undocking the client social device 135 from SNET group 237, some combination thereof, or the like. This can occur automatically, in response to a trigger event, including, without limitation, elapse of a predetermined time after entering or leaving the premises, or the like. In some embodiments, a client SNET group 135 can maintain residual access to SNET group 237 after a device docked to the client SNET group 135 leaves the premises. For example, where the premises associated with SNET group 237 is a hotel, and a member associated with client SNET group 135 belongs to an exclusive hotel membership, the client SNET group 135 associated with the member may, after a docked device leaves the premises, still receive at least some access to capabilities provided by SNET group 237, including, without limitation, a call routing phone service.

In some embodiments, an SNET group associated with a member, including a human, a device, or the like, can be docked to another SNET group to enable the member to access or receive services, contact information, other information associated with the SNET group, exchange information, some combination thereof, or the like. Such a member can be an existing member of an SNET, a nonmember, also referred to herein as a third party, or the like. For example, a human user with a device can approach within a threshold, such as a proximity, of an access point for a premises, or the like, upon which the access point, some other device associated with the premises, or the like delivers an invitation to dock to an SNET group associated with the premises to the human user via the device, to the device itself, some combination thereof, or the like. The invitation can vary depending upon whether one or both the human user and the device are already members of the SNET, nonmembers, or the like. For example, where the device is not a social device, the access point can deliver an invitation in the form of a web page to the device via a browser application, or the like, that offers the device, human user, some combination thereof, or the like the option of joining an SNET group as an ad hoc member. Where the device is a social device, the invitation can include a direct invitation to dock an SNET group with the premises-associated SNET group via a social interface, user interface, or the like, located on the device.

The invitation can be accepted via one of various acceptance processes. For example, where a social device receives an invitation that includes a unique identifier uniquely identifying the SNET group to which the member is invited to dock an SNET group, social device, or the like, the social device can interact with an access point, another device, an SNET, SNET group, SNET sub-group, and the like via an independent pathway, or the like to utilize the unique identifier to accept the invitation. Acceptance in the above example may include simply delivering the unique identifier and information identifying the SNET group associated with delivery of the unique identifier, upon which the SNET group is docked to the premises-associated SNET group. In addition, where a non-social device attempts to access an access point, and the access point pushes a web page to a browser application on the non-social device, the acceptance process can include accessing the web page, indicating a desire to dock with the SNET group, providing some other information, or the like, such that the non-social device, an ad hoc guest SNET group, some combination thereof, or the like is accepted as docked to the premises-associated SNET group.

Upon accepting the invitation, the member, human user, device, some combination thereof, or the like can gain at least some access to capabilities provided by the premises-associated SNET group. For example, where the premises is a coffee shop, a member whose personal SNET group is docked to a premises-associated SNET group may gain access, via one or more devices docked to his personal SNET group, to various services including, without limitation, online newspapers, videos, a menu for item sales, shopping options for home delivery, ordering interface for on-site delivery, other information, some combination thereof, or the like. In another example, where the premises is a hotel, private residence, or the like, a member whose personal SNET group is docked to a premises-based SNET group may gain access, via one or more devices docked to his personal SNET group, to services, information, and the like including, without limitation, access to locally or remotely-stored content items, contact information, access to control functional elements of on-site devices, some combination thereof, or the like. In another example, where the premises is a shopping mall, an access point may deliver, push, or the like an invitation to the device, user of the device, some combination thereof, or the like to dock to an SNET group associated with the mall. The access point may require that a device, user, or the like attempt to access the access point before the invitation is delivered to the device, user, or the like in the form of a unique identifier, web page, or the like. Services associated with the SNET group can include, without limitation, advertising, sales and coupon information, and the like provided by computing devices of each store within the mall, a mall mapping service that show those docked to the SNET group the locations of particular stores, a mall music service that provides those docked to the SNET group with music or other media content served by media sources associated with the SNET group, telephone directory services, a search engine relating to anything within any store in the mall, some combination thereof, or the like.

In some embodiments, an access point supports delivery of invitations to dock to an SNET group, processing acceptances of invitations, routing communications between members, ad hoc members, and potential members of an SNET group and the SNET, SNET group, or the like. A device may need to attempt to access the access point to receive an invitation provided by the access point. In some embodiments, the access point automatically provides the invitation to any device that the access point determines has crossed a threshold, such as a predetermined proximity to a premises, location, or the like. Those docked to the SNET group, including ad hoc members, SNET groups, ad hoc SNET groups, some combination thereof, or the like, may be able to couple with other devices, users, members, or the like that are also docked with the SNET group. Upon crossing another or the same threshold, docking to the SNET group can be terminated or restricted. For example, where a device that enters a premises is offered an ad hoc docking to an SNET group by an access point, the access point may restrict, terminate, or the like the ad hoc docking upon determining that the device has left the premises.

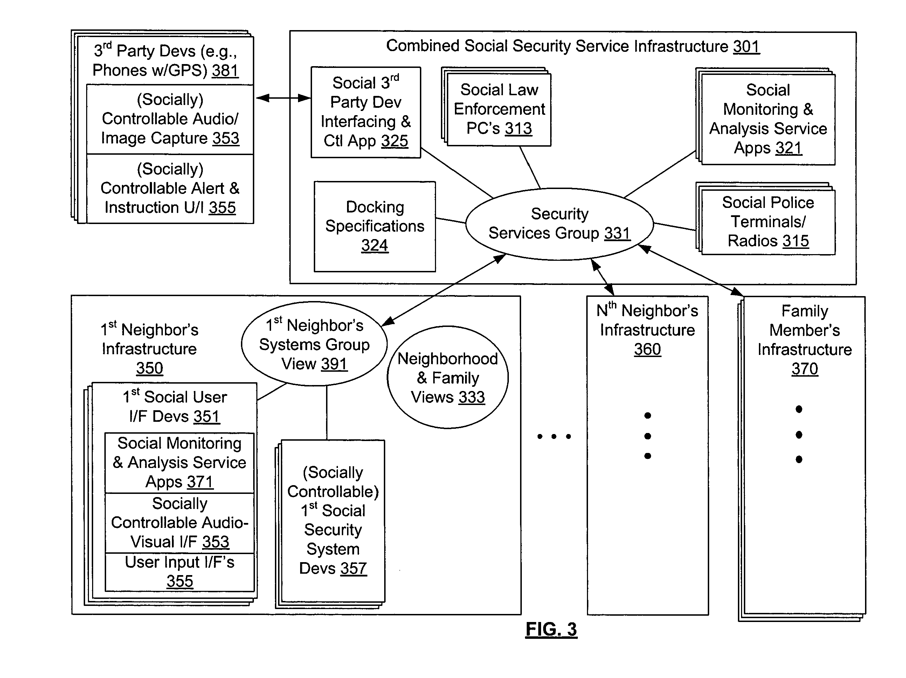

Referring now to FIG. 3, a social networking (hereinafter "SNET") environment according to various embodiments is illustrated and discussed. In the illustrated embodiment, infrastructure 301 provides interactions between various capabilities 313, 315, 321, and 325, some or all of various infrastructures 350, 360, and 370, and various third-party devices 381 via docking links with SNET group 331. In some embodiments, some or all of various infrastructures are supported by various processing systems, SNET systems, SNETs, management services, devices, network nodes, some combination thereof, or the like.

In some embodiments, various devices, groups, services, applications, and the like can be docked to one or more various devices, groups, services, applications, and the like. For example, in the illustrated embodiment, various parts of infrastructures 350, 360, and 370, including various devices 357 and 351 that are part of infrastructure 350, are docked to SNET group 331 as governed by one or more various docking specifications 324. The docking of various devices to an SNET group can be supported, managed, and the like by a management system, processing system, come combination thereof, or the like. Various docking links to one or more SNET groups and the like can be represented by one or more representative views of various capabilities, services, applications and the like provided by the group, various members, infrastructures, devices, and the like docked to the group, or the like. For example, in the illustrated embodiment, one or more users associated with infrastructure 350, in which one or more devices 351 and 357 are docked to SNET group 331, may be provided a representative view 391 of various capabilities, members, and the like associated with group 331. As discussed above, the view 391 can present a simplified view of the SNET group 331; the view 391 can also present a restricted view of the members, capabilities, and the like docked with group 331. In some embodiments, a user can interact with a representative view to interact with various capabilities provided by a docked group. For example, in the illustrated embodiment, a user associated with infrastructure 350 can interact with representative view 391 to interact with various capabilities provided by SNET group 331 which can include, without limitation, interaction with various services, applications, and the like provided by SNET group 331, interaction with data provided by various services, applications, capabilities, devices, infrastructures, groups, and the like that are docked to SNET group 331, access to one or more various functional elements of various devices docked, directly, indirectly, or the like, with SNET group 331, manage various docking specifications 324 governing docking links with SNET group 331, or the like. In addition, a user associated with infrastructure 350 can, in some embodiments, manage various docking specifications 324 to manage access to some or all docked members, capabilities, infrastructures, devices, or the like of SNET group 331 to data, functional elements, or the like associated with various devices, groups, and the like that are part of infrastructure 350.

In some embodiments, various users associated with an infrastructure are presented with various different representative views of the infrastructure, groups to which some or all of the infrastructure is docked, and the like. For example, in the illustrated embodiment, where devices 357 and 351 of infrastructure 350 are docked to SNET group 331, and at least one user of the infrastructure 391 is presented with a representative view 391 of capabilities provided by SNET group 331, various other users associated with infrastructure 350 can be presented with a different representative view 333 of group 331. Such different views 333 can present various levels of access to capabilities provided by SNET group 331. For example, where a user presented with representative view 391 is the owner of infrastructure 350, and various family members, friends, neighbors, and the like of the user have at least some access to infrastructure 350, the user may provide a limited access to capabilities of group 331 via a special "neighborhood and family" view 333 of capabilities of SNET group 331. Restrictions can include, without limitation, restrictions from access or management of various docking specifications 324.

In some embodiments, capabilities provided by an SNET group include services, applications, or the like that are docked to the SNET group via a docking process. The docking process can be managed, supported, and the like by a management system. For example, a management system can, via one or more various docking processes, dock one or more various social monitoring and analysis service applications 321 (hereinafter referred to interchangeably as "monitoring systems"), capabilities 313, 315, 325, and the like to SNET group 331. In some embodiments, a capability can be provided by a third-party service, application, or the like that is docked to SNET group 331.

In some embodiments, an SNET environment can enable interactions between various devices, SNET groups, capabilities, services, applications, and the like based upon analysis of data from various sources. For example, interactions can be based upon identification by a service of various trigger events, respond to various trigger events, or the like in data received from a data source. Interactions can include, without limitation, access to data from various devices, groups, infrastructures, and the like by other various capabilities devices, groups, and the like associated with one or more SNET groups. For example, in the illustrated embodiment, SNET group 331 can enable various capabilities 313, 315, 321, and 325 that are docked, associated, or the like, to SNET group 331, some or all of various infrastructures 350, 360, and 370, and various third-party devices 381 to access data received from various devices, SNET groups, and the like. Such access can be managed, governed, and the like based on various docking specifications 324, which can be part of one or more of the infrastructures 301, 350, 360, and 370, and can be established, managed, altered, updated, terminated, and the like by one or more users associated with one or more infrastructures, one or more devices, one or more third parties, one or more processing systems, one or more management systems, some combination thereof, or the like. For example, in the illustrated embodiment, data from one or more devices 357 docked to SNET group 331 can be provided to SNET group 331, where a docking specification 324 governing various links between the devices 357 and group 331 restricts access to the data to some services, applications, entities in infrastructure 301, members of SNET group 331, infrastructures 360 and 370, third party devices 381, and the like. Docking specifications can be altered at any time, under certain conditions, and the like by one or more authorized users, devices, processing systems, management systems, SNET groups, and the like according to internal logic, trigger event response, or the like.

Access to data from a source can include, without limitation, receiving data provided to an SNET group by a docked source, accessing the docked source via one or more docking links to acquire the data, receiving data from the docked source by requesting the source to provide the data, some combination thereof, or the like. Such access governed by various docking specifications governing various links with the SNET group. For example, in the illustrated embodiment, a user associated with infrastructure 350 can manage docking specification 324 to permit SNET group 331 to receive data from various devices 357 that are docked to SNE group 331.

In some embodiments, data received can be processed, monitored, analyzed, or the like by various members, capabilities, services, applications, devices, or the like that are linked with an SNET group, device, processing system, infrastructure, or the like. For example, in the illustrated embodiment, infrastructure 301 can include one or more monitoring and analysis service applications 321 that can monitor, analyze, process, and the like data received from various devices, groups, and the like that are docked with SNET group 331. Such monitoring, analysis, processing, and the like can include, without limitation, monitoring the data to determine whether the data correlates with, meets, exceeds, or the like one or more various thresholds, where the thresholds established by various applications on the fly, predetermined by various sources and access by a monitoring and analysis application during operation, or the like and can be stored as information on some part of infrastructure 301, a processing system supporting infrastructure 301, various devices, processing systems, network nodes, and the like associated with a network, and the like. Thresholds can be established, updated, overwritten, terminated, or the like by the various applications 321, by some part of infrastructure 301, by some part of a third party, by another infrastructure 350, 360, and 370, or the like. In some embodiments, social monitoring and analysis service applications 321 can include, without limitation, a monitoring service, an analysis service, a monitoring and analysis service, or the like. One or more of the monitoring and analysis service applications can also include a third-party service. For example, one or more of social monitoring and analysis service applications 321 can include a third-party monitoring service.

In some embodiments, a monitoring and analysis application can respond to data, analyzing data, or the like by selectively triggering a support function. Such a response can include determining that some or all of the data correlates, meets, exceeds or the like with respect to a threshold by taking various actions. Support functions can include, without limitation, attempting to access additional information from various sources; sending various notifications, requests, and the like to various services, devices, infrastructures, and the like; analyzing data from one or more various sources to determine a trend, track an item, track an event, some combination thereof, or the like; controlling one or more portions of one or more devices, or the like. For example, where a social monitoring and analysis service application 321, which monitors data received from device 357 via docked group 331, determines that data received from device 357 exceeds a threshold, the application 321 can respond to the determination by accessing some part of devices 357, access some part of device 351, send a notification to a user associated with device 357 via a signal that can be access by the user via various interfaces 353, 355, and the like on device 351, interact with at least some part 353, 355, or the like of a third-party device 381 via an interfacing and control application 325 that is linked to application 321 via SNET group 331, interact with various entities via devices 313 and 315, communicate some or all of the received data, the application's 321 analysis of the data, an invitation to dock with SNET group 331, some combination thereof, or the like, to various entities via devices 3113 and 315, interact with some or all of various infrastructures 360 and 370 that are also docked to SNET group 331, some combination thereof, or the like. In some embodiments, accessing some part of a device docked with an SNET group can include, without limitation, controlling at least some functional element of the device, requesting such control, accessing another device via the docked device, some combination thereof, or the like.

In some embodiments, various capabilities, services, applications, devices, SNET groups, and the like can be docked to each other by various docking processes, which can be initiated, managed, and the like by the elements to be docked, a third device, group, or the like. For example, in the illustrated embodiment, a device 357 that is part of infrastructure 350 can initiate a docking process to dock with SNET group 331 without intervention of a human user associated with infrastructure 350, based upon commands, input or the like from a user associated with infrastructure 350, based upon input, commands, or the like from another device 351 that is part of infrastructure 350, some combination thereof, or the like. In some embodiments, a device, group, or the like can be docked to another device, group, or the like by actions, commands, input, and the like from another device. For example, in the illustrated embodiment, a user may interact with various interfaces 353 and 355 on interface device 351 to dock various devices 357 to SNET group 331, manage docking links between devices 357 and SNET group 331, dock various SNET groups that are part of infrastructure 350 to SNET group 331, some combination thereof, or the like. A user can utilize the interface device to manage docking specifications 324 governing a link between a device 357 and SNET group 331, establish various responses, actions, or the like that various monitoring and analysis service applications 321 are to take in response to various determinations, or the like. For example, a user may utilize device 351 to set a third-party device 381 that application 321 is to communicate with if it determines that data from a docked device 357 exceeds a certain threshold.

In some embodiments, various infrastructures, SNET groups, devices, and the like associated with an SNET system interact to enable monitoring of data from various devices and respond based upon the data monitoring. For example, in the illustrated embodiment, SNET group provides capabilities, services, applications, and the like associated with a social security service that can include monitoring and response to data from various security system devices docked to an SNET group 331 in the infrastructure 301. The group 331 can be established by some part of the infrastructure 301 including, without limitation, a management service, according to some internal logic, in response to an input from another infrastructure, device, or the like. The illustrated monitoring and analysis service applications 321 docked to SNET group 331 can, in some embodiments, monitor and analyze data received from one or more docked sources of data, including without limitation devices, SNET groups, and the like, and respond to such monitoring and analysis by interacting with various services 313 and 315, interact with various third-party devices 381, interact with various devices 357, 351, and the like associated with various infrastructures 350, 360, and 370, or the like. In some embodiments, a security system device 357 can include, without limitation, a motion sensor, a camera system, an environment sensor, some combination thereof, or the like. The device 357 can be docked to SNET group 331 without user intervention, according to some logic internal to the device 357, based upon a command, input, or the like from an interface device 351, via docking of an SNET group to which the device 357 is docked to SNET group 331, some combination thereof, or the like. Some or all data generated by the docked device 357, another device 357 linked to the docked device 357, some combination thereof, or the like can be communicated, provided, made accessible to, or the like with respect to SNET group 331, various members, capabilities, services, applications, infrastructures, some combination thereof, or the like as set by various docking specifications, internal logic of various processing systems, devices, or the like. For example, a device 357 that docks with SNET group 331 can set a docking specification that restricts access to data generated by the device 357 to only some applications 321 and docked infrastructures 360 and 370, and the docking specification 324 can be further managed, altered, or the like by a user associated with infrastructure 350 via interaction with a representative view of SNET group 331 on interface device 351. In some other embodiments, a user can utilize interface device 351 to dock various security devices 357 to SNET group 331, set various docking specifications governing the link between the devices 357 and SNET group 331, and the like. Where various docking specifications 324 enable a monitoring an analysis service application 321 to access data generated by a docked device 357, the application 321 can monitor the data for correlation with various thresholds. For example, in the illustrated embodiment, data generated by various security devices can include images, video streams, motion detection data, various other data related to an environment proximate to the docked device 357, some other location, or the like. The application 321 can monitor the data for thresholds including, without limitation, detection of movement at various predetermined times, detection of movement upon receiving a warning notification from various users, third parties, or the like. In some embodiments, a social monitoring and analysis service application can be located on a device outside the service infrastructure 301. For example, in the illustrated embodiment, an application 371 can be located on interface device 351 and can monitor and analyze some or all data generated by various devices 357, transmit monitoring and analysis data to SNET group 331, some combination thereof, or the like. Monitoring and analysis can also, in some embodiments, be performed by the device generating the data, and results of the monitoring and analysis provided to SNET group 331.

Upon receiving the data, a monitoring and analysis service application can take a responsive action. Such a responsive action can include triggering one or more support functions. A responsive action can be taken in response to determining that the data correlates with, exceeds, meets, or the like with respect to a threshold. For example, in the illustrated embodiment, a third-party monitoring service 321 docked to SNET group 331 can respond to determining that data from various docked devices 357 indicate movement in a location by sending a warning notification to a user associated with device 357 at interface device 351, sending warning notifications to various other docked infrastructures 360 and 370, sending some or all of the monitored data, a warning notification, and the like to various services 313, 315, and the like linked to SNET group 331, sending a warning notification, access to data from various devices 357, and the like to a third party device 381, some combination thereof, or the like. In some embodiments, a warning notification can include a request for additional access, docking or the like of various devices associated with the recipient of the notification, an invitation to dock with various devices, SNET groups, or the like, a request to communicate with various other devices, users, or the like. For example, where an application 321 responds to a determination that data from a docked device 357 indicates movement in a location by sending a warning notification to a third party device 381, the notification can include contact information to contact various services, users associated with device 357, the device 357 itself, some combination thereof, or the like.

In some embodiments, a monitoring application can analyze data from various sources to establish a trend, track an event, track a trend, track an object, some combination thereof, or the like. For example, where an application 321 detects movement in a first location based on analysis of data from a device 357, the application can analyze data from various additional docked devices from infrastructures 350, 360, and 370 to track motion detections across a wider geographic area. The application can transmit requests to users associated with the various devices, infrastructures, or the like to permit access to data from associated devices, if the docking specifications currently restrict such access. In addition, where a monitoring and analysis application is located on a device 351, 357, or the like, the application 371 can access, request access, or the like with respect to various devices associated with infrastructures 360, 370, and the like, various third-party devices 381, and the like, communicate with various services 313 and 315 associated with SNET group 331, send notifications to a user associated with infrastructure 350 via interface device 351, one or more representative views 391 and 333, some combination thereof, or the like.

In some embodiments, access to various data, analyses, functional elements, or the like can be based upon notifications received from various services, users, or the like. For example, in the illustrated embodiment, a third party device 381, user associated with an infrastructure 350, 360, 370, or the like, service 313, service 315, or the like may send a warning notification to SNET group 331, which may be routed, forwarded, or the like to various devices, infrastructures, or the like docked with SNET group 331. Such a notification can include a request to modify various docking specifications to enable access to data generated by various devices 357 by various members, capabilities, infrastructures, devices, and the like docked with SNET group 331. As an example, a law enforcement service 313 can transmit a notification of a local crime to a security device SNET group 331, which forwards the notification to users associated with infrastructures having devices 357 that are docked to group 331, where the notification includes a request that the users manage various docking specifications 324 to enable access to data from associated devices by various applications, other users, services 313, or the like. In some embodiments, a service 313 can unilaterally override docking specifications 324 and access data, functional elements or the like associated with various devices docked to SNET group 331. For example, where a law enforcement service 313 receives a notification of a crime at a certain location, the service may utilize SNET group 331 to gain control and access to security devices 357 associated with the location, in the process overriding various docking specifications 324. In some embodiments, docking specifications can provide for overriding of certain access restrictions based upon certain trigger events. For example, a docking specification 324 governing access by SNET group 331 to data generated by device 357 may provide for overriding of all restrictions on data access in response to a monitoring and analysis service application 321 determining that a certain trigger event is identified by the data generated by device 357 exceeding a certain threshold value.

In some embodiments, communications, interactions, and the like between various devices, SNET groups, services, applications, and the like proceed through one or more various communication pathways. For example, in the illustrated embodiment, where a social device 351 is docked to SNET group 331, and a monitoring and analysis service application 321, such as a third-party monitoring service, is docked to SNET group 331, the social device 351 and the monitoring service 321 can interact through one or more various communication pathways, which can include, without limitation, social pathways. For example, communications between social device 351 and monitoring service 351 can flow through a pathway provided by one or more management services in SNET infrastructure 301, including, without limitation, a management service that supports the communication pathway, docks device 351 and monitoring service 321 to SNET group 331, some combination thereof, or the like. A communication pathway between two entities can be provided by an SNET group to which both entities are docked. For example, in the illustrated embodiment, a communication pathway between device 351 and monitoring service 321 can be provided by SNET group 331. Such a pathway can proceed directly, indirectly, or the like. For example, a communication pathway between device 351 and monitoring service 321 can proceed through SNET group 331, through a management service supporting SNET group 331, through a third-party entity, be redirected through a proxy, some combination thereof, or the like. A communication pathway can proceed directly in a point-to-point pathway between the device 351 and the monitoring service 321, without going through the management service. For example, monitoring service 321 can access address information from SNET group 331 that it can utilize to communicate with device 351 without having to go through SNET group 331. A communication pathway can also proceed through a proxy, which can include a third-party device, service, or the like. In addition, a communication pathway can be re-directed through a device, service, node, or the like that is outside the SNET infrastructure 401. Pathway characteristics can be determined by a management service, one or more processing systems, a docked device, service, application, third party, or the like. Furthermore, pathway characteristics can be managed by one or more management systems, devices, services, nodes, or the like associated with the pathway, and characteristics can be altered to adapt to changes in pathway characteristics, including, without limitation, bitrate, latency, bit error rate, some combination thereof, or the like.

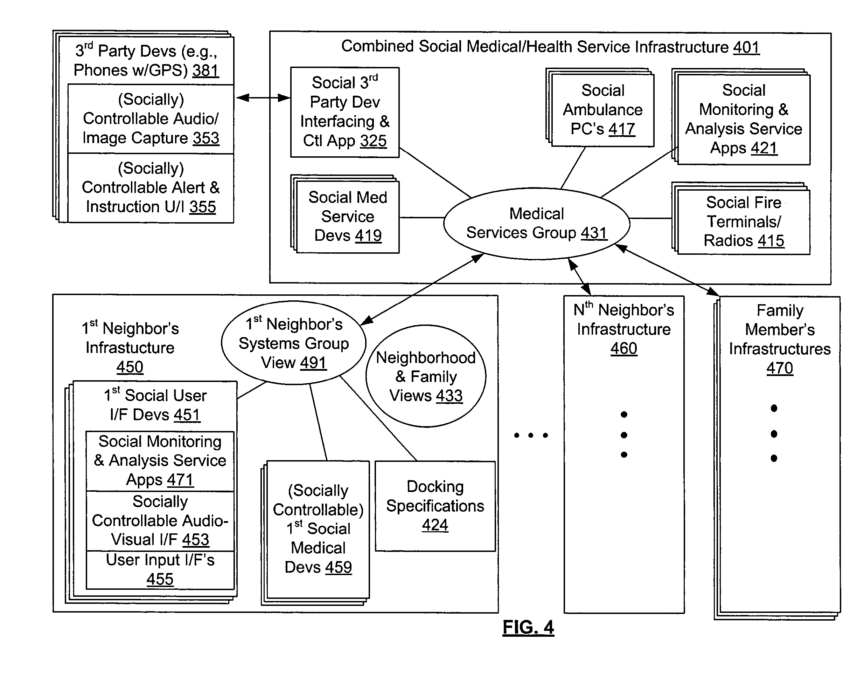

Referring now to FIG. 4, a social networking (hereinafter "SNET") environment according to various embodiments is illustrated and discussed. Some embodiments of the environment discussed with reference to FIG. 3 can be configured for various services. For example, in the illustrated embodiment, infrastructure 401, which can be supported, in part or in full, by various processing systems, devices, network nodes, SNET systems, SNETs, some combination thereof, or the like, provides capabilities of a medical services group 431 that enables interaction between various medical devices, interface devices, third-party devices, applications, services, and the like. Such interactions between docked devices, infrastructures, and the like can be governed by various docking specifications 424, which can be part of docked infrastructures, a central service infrastructure, some combination thereof, or the like. In the illustrated embodiment, and as discussed with reference to FIG. 3, various devices 459 associated with an infrastructure 450 can be docked to an SNET group 431 that is part of infrastructure 401; such docking can be initiated by the docking devices 459, controlled by another device 451, some combination thereof, or the like. Interaction with capabilities, members, services, applications, docked infrastructures, and the like associated with SNET group 431 can proceed via interaction with one or more various representative views 491 and 433 of SNET group 331.

In the some embodiments, one or more monitoring and analysis services 421, 471, or the like can monitor data generated by one or more various devices docked, directly, indirectly, or the like, with SNET group 431, and respond to various determinations based on analysis of the data. For example, where infrastructure 450 includes various devices 459 including motion detection devices that generate motion detection data for various rooms in a house in which an elderly user, individual, or the like resides, an application 421 can respond to a determination that motion is no longer detected within a certain room, within a certain time period, by transmitting a contact request to an interface device 451 associated with infrastructure 450. The request may request that the elderly individual communicate with a service, application, or the like associated with SNET group 431, via an interface 435, 455, or the like, to ensure that the individual's ceasing of motion is not due to some sort of debilitation, injury, or the like. In some embodiments, a threshold against which an application 321 may compare data received from docked devices can include various time and location ranges. For example, the application 321 may only determine that a threshold has been exceeded, which can constitute a trigger event necessitating a certain response by infrastructure 401, if data from devices 459 indicate that motion has ceased within certain hours of the day, within certain rooms of a house, some combination thereof, when a certain other device, security system, or the like, is disarmed, armed, or the like. The application 421 can also respond to a determination of a trigger event by sending a notification to a third-party device 481. For example, the application 421 can, in response to determining lack of movement in the house after a certain period of time by sending a request to a third-party device 481, which can belong to a neighbor, family member, friend, or the like to contact the elderly individual via interface device 451, some other method, some combination thereof, or the like to ensure the individual is okay. In some embodiments, the application 421 can respond to determining that no response has been received to a notification sent to device 351, a certain additional amount of time has elapsed, or the like by sending a warning notification to various services 417, 419, 415, and the like, various neighbor infrastructures 460, 470, and the like, accessing control of various devices associated with infrastructure 450, some combination thereof, or the like. In some embodiments, notifications are sent to one or more various services 417, 419, 415, and the like upon initial determination that data from various devices 459 exceed a threshold, constituting the occurrence of a trigger event. For example, where the devices 459 are medical devices that monitor the health of an individual, an application monitoring data generated by some or all of the devices can respond to determining that the data exceeds a threshold by sending a warning notification to various services, infrastructures, third-party devices, and the like. In some embodiments, infrastructures to be sent a notification can be determined by various information associated with the infrastructures. For example, where infrastructure 401 has access to information that identifies geographic locations associated with some or all infrastructures 450, 460, and 470, a response to a determination that a trigger event has occurred can include transmitting a warning notification to users, devices, and the like associated with infrastructures, devices, and the like that are associated with geographic locations within a certain threshold geographic proximity to one or more devices, infrastructures, and the like for which the trigger event has occurred.

In some embodiments, an infrastructure can enable interactions between various types of devices and services. For example, in the illustrated embodiment, an application 421 can respond to determining that one or more trigger events have occurred, based upon data received from various devices, infrastructures, and the like, by communicating, interacting, and the like with various medical services 419, fire services 415, ambulance services 417, various other services, some combination thereof, or the like. In some embodiments, at least some part of infrastructure 401 can invite one or more various services to dock with group 431, dock the various services, undock the various services, some combination thereof, or the like.

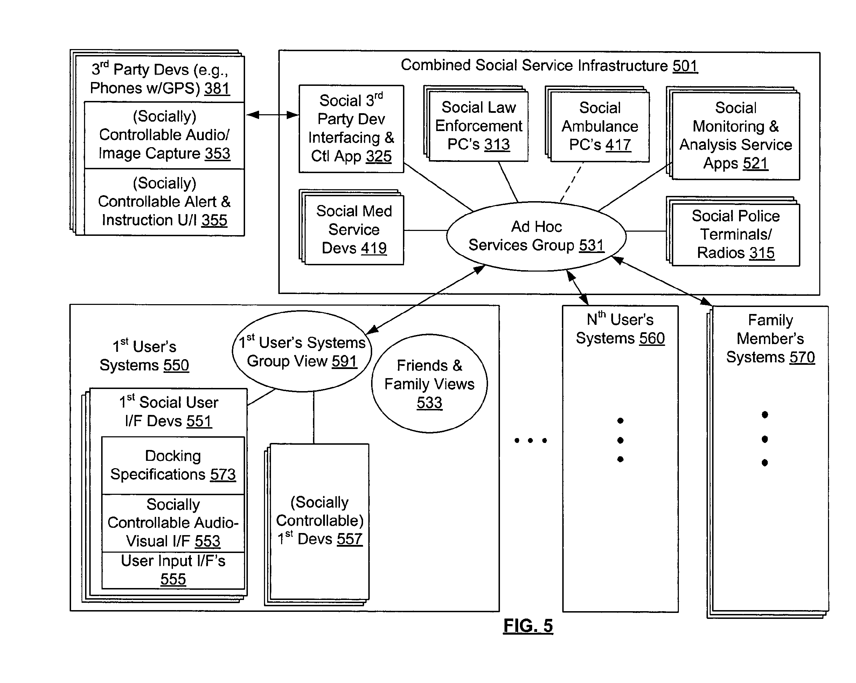

Referring now to FIG. 5, a social networking (hereinafter "SNET") environment according to various embodiments is illustrated and discussed. Some embodiments of the environment discussed with reference to FIG. 3 can be configured for ad hoc services, interactions, and the like. For example, in the illustrated embodiment, a social service infrastructure 501 can establish an ad hoc SNET group 531 that links various capabilities, services, applications, infrastructures, devices, and the like. As shown in the illustrated embodiment, infrastructure 501 can include an ad hoc SNET group 531 that links only some of the services 313, 325, 419, 315, and 521 associated with infrastructure 501, while at least some services 417 associated with infrastructure 401 is not linked with the ad hoc SNET group 531. In some embodiments, establishment of one or more various ad hoc SNET groups, determination of which services, capabilities, services, applications, infrastructures, devices, and the like to link, dock, invite to dock, and the like can be managed the infrastructure 501, one or more various users, one or more various user systems, infrastructures, and the like. For example, a user associated with a user system 550 may request creation of an ad hoc SNET group 531 that is linked to certain services, capabilities, applications, infrastructures, and the like. The infrastructure 501 can respond to the creation of the group 531 by transmitting invitations to dock with the group 531 to various infrastructures, systems, devices, and the like based upon input from a user, based on some internal logic, some combination thereof, or the like. In some embodiments, creation of an SNET group includes specifying threshold information against which a monitoring and analysis service application is to monitor data received from certain docked devices to identify occurrence of a trigger event, track a trend, track an event, track an entity, some combination thereof, or the like.

As an example, a user associated with system 550, a law enforcement service 313, some combination thereof, or the like, may report a child abduction event to infrastructure 501. In response to the report, in response to an additional request for creation of an SNET group dedication to the abduction event, some combination thereof, or the like, the infrastructure 501 can create an ad hoc SNET group dedicated to the abduction event. In some embodiments, the infrastructure can receive threshold information from a user system 550, a service 313, access threshold information from a service 315, access threshold information from a third-party device, some combination thereof, or the like. For example, a user, service, or the like requesting creation of an ad hoc SNET group 531 dedicated to a child abduction event can provide threshold information related to a license plate, make, model, or the like associated with a vehicle related to the abduction event. The infrastructure 501 can also seek out the threshold information from a predetermined third-party device, service, or the like. The infrastructure can also seek out the threshold information from sources identified based upon some internal logic.

In some embodiment, the infrastructure 501, a user system 550, a third-party device 381, some combination thereof, or the like, can request other systems 560, 570, and the like to join the ad hoc SNET group 531 by docking one or more various devices, certain devices, or the like to the SNET group 531 to enable monitoring, analysis, and the like of data generated by the docked devices. For example, in the illustrated embodiment, the invitation may request users in automobiles to dock camera devices 557 located in the automobiles to provide images of license plates taken by the camera devices to SNET group 531 for analysis by various applications 521. Such devices 557 can be docked to the group 531 by user interaction with a separate interface device 551 which can dock the devices 557 via interaction with one or more interfaces 553, 555, and the like. A user can also, in some embodiments, authorize access to data generated by various docked devices 557, by various applications, services, infrastructures, devices, third parties, users, and the like, by setting one or more docking specifications 573 governing a link between a device 557 and SNET group 531.

In some embodiments, an application can monitor data received from docked devices to determine if data from any one or more devices correlates with a threshold. Upon determining that a threshold is reached, exceeded, or the like, which can constitute occurrence of a trigger event, the application 521, infrastructure 501, processing system supporting some or all of the infrastructure 501, some combination thereof, or the like can respond by taking one or more certain actions. For example, where application 521, receiving camera images of license plates from various camera devices docked to SNET group 531, identifies one or more license plate images associated with a vehicle of interest in threshold information, the application can send a notification to one or more services, docked devices, infrastructures, third-party devices, or the like that the vehicle of interest has been imaged. In some embodiments, where image data received from one or more docked camera devices include geographic location data generated by various devices associated with the docked devices, the notification can include indications of the time and location of the identification of the vehicle. A notification can be sent to a user associated with the device that took the trigger image to provide additional information, contact a certain law enforcement service, follow the identified vehicle, some combination thereof, or the like.

In some embodiments, the application can analyze data received from various devices, infrastructures, or the like to assemble a trend, track a trend, track an event, track an entity, some combination thereof, or the like. For example, where images, with associated time and location data, are received from various devices docked with SNET group 531, and several images correlate with threshold information to identify a vehicle of interest, one or more applications 521 can analyze the received data to track the travel of the vehicle of interest, project its potential movements, notify various services, applications, third parties, infrastructures, devices, and the like of the vehicle's projected present location, likely trajectory of travel, some combination thereof, and the like.

Some embodiments according to the disclosure comprise a wide variety of social devices, device services, proxies, and software applications of various types participating as SNET/SNET group members. Further, social devices and other types of SNET/SNET group members having related or specific aspects, characteristics, interdependencies, and the like can form SNET/SNET groups having specific purposes such as those described below in conjunction with FIG. 1. Various embodiments can comprise, for example, SNET/SNET group members such as device manufacturers, automobile owners, hospitals and medical providers, repair shops, insurance companies and other third parties that might have an interest in communicating with a human member and/or associated SNET devices. Such SNETs/SNET groups/SNET subgroups can be stand-alone or an extension of other SNETs/ SNET groups/SNET subgroups.

Some embodiments of an SNET/SNET group/SNET sub-group according to the disclosure comprise various security devices and related services. Such SNETs can include, for example, child monitoring groups, neighborhood watch groups, police/fire and security company groups, etc. A police or security company can, in some embodiments, participate in an SNET in order to monitor a series of crime alert situations via a neighborhood group of participants and systems. Other actions/functionality can include, without limitation: alert generation due to social docked alarm systems (e.g., a neighboring security device activation might trigger an alert within nearby homes, possibly allowing neighbors to identify thieves, etc., and activate exterior lighting of a contiguous group of neighboring homes); activation of security cameras with recording capabilities; some combination thereof; and the like. Likewise, police can, in some embodiments, use the SNET to gain access to, and participate in, an area-wide mapping. This way, hot spots of criminal activity could be identified and quickly serviced using social network "civilians" and their communication devices (turn on recording of sensor devices) in and around regions, as well as logging individual identities for possible interviews for evidence.

In some embodiments, social (family) communication devices indicate when a residence is likely unoccupied. When this occurs, motion detection within the residence can indicate an intrusion. A social camera device could then be activated to begin capture, storage and delivery of information relating to motion, via the social network, to family communication devices. Family members can then make a judgment call regarding such information, and if desired trigger (via docked social devices) police or security team's involvement.

Social security/safety devices, in some embodiments, can include, without limitation: smoke, CO2 and radon detectors, some combination thereof, and the like. For example, a social smoke detector can deliver an alarm not only in a traditional way, but also via some or all docked social devices within a safety SNET/SNET group. Via such a SNET group, other social devices within a home might begin to alarm. Some such devices might even communicate to a neighbor, friend or relative, fire station and/or other monitoring personnel. In some embodiments, other social device members might be utilized via a SNET group. For example, dedicated social cameras within a home can be activated and begin capturing, storing and forwarding video. Face recognition can be employed in an effort to identify intruders. Fire or police can view forwarded video to assess the need to dispatch and/or contact a home owner (using use social devices in a subject SNET) for voice/video communications. Smoke data can also be delivered along with smoke detector metadata, such as GPS data ("living room" on the northeast corner of the house on the first floor), home address, owner, contact info, etc., which can all be part of the social safety SNET group. Note that social smoke detectors can have an integrated camera and fireproof storage for later deciphering of the cause of a fire.

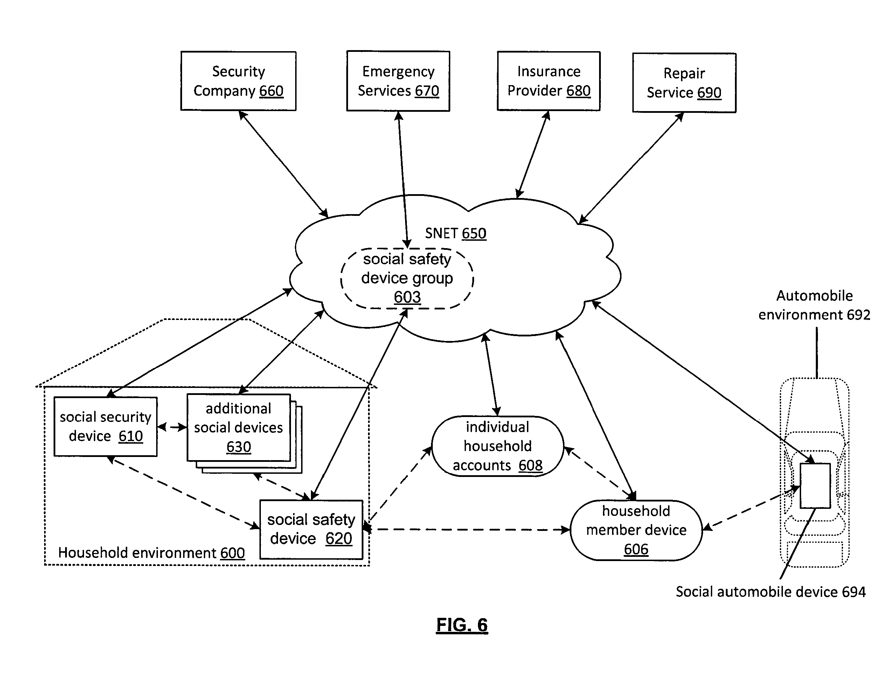

FIG. 6 illustrates an embodiment of interaction between various social devices and one or more social networks. In some embodiments, social devices can be located in a certain environment, including without limitation, a household environment 600, an automobile environment 692, an office environment, an industrial environment, some combination thereof, or the like. Social devices located in an environment can be functional devices that interact with social networks, other devices, and the like. For example, a household environment 600 can include one or more devices that are socially-aware, including, without limitation, one or more social safety devices 620, one or more social security devices 610, one or more additional social devices 630, and the like. A social safety device can be a smoke detector, a fire alarm, a carbon monoxide detector, a sprinkler, a radon detector, a geiger counter, some combination thereof, or the like. A social security device 610 can include, without limitation, a motion detector, a lock, a security system, a closed-circuit television (CCTV) camera, some combination thereof, or the like. An additional social device can include, without limitation, a thermometer, a thermostat control, a lawn-sprinkler system, a humidity detector, a rainfall meter, or the like. Such devices, in addition to performing their individual functions, can interact with one or more social networks or social network groups, other devices within or without the household environment 600, one or more members of a social network or outside any social network, some combination thereof, or the like. A social device can interact with an SNET 650, which may or may not be dedicated to social devices, one or more aspects of the social devices, or the like, by becoming a member of the SNET 650, a particular SNET group 603 dedicated to similar types of devices, some combination thereof, and the like. Which SNET 650 or SNET group 603 the social device interacts with can be determined by user input, internal logic, or the like. For example, a social smoke detector may be hard-wired to, upon being connected to a network, seek out and join one or more selected SNETs 650, SNET groups 603, or the like. Social devices may be configured to interact with one or more SNETs 650, SNET groups 603, or the like via a wireless network, wired network, cellular network, some combination thereof, or the like. Such connections may adapt to changing local conditions. For example, a social smoke detector can utilize a wireless network to interact with a social safety device group 603 as long as the smoke detector receives power from the house, but may switch to a lower-power connections, such as over a cellular network, in the event that main power is lost or otherwise degraded below a certain threshold.

Participants in SNET 650 can include entities with specific interest in one or more aspects of the social devices 610, 620, 630, 694, and the like. Aspects can include, without limitation, one or more functions, functionalities, characteristics, locations, properties, some combination thereof, or the like associated with one or more devices. For example, SNET 650 can include one or more of a security company 660, an emergency services provider 670, an insurance provider 680, a repair service 690, an account of SNET members associated with one or more of the household environment 600 automobile environment 692, or the like, individual social devices 606 that may or may not be associated with an SNET member account, some combination thereof, and the like. When a social device sends a notification to SNET 650, SNET group 603, or the like, additional notifications can be sent to one or more members of the SNET 650 or SNET 603, respectively. For example, where a social security device 610 detects an intruder, in addition to triggering an alarm, the social security device 610 can transmit a warning signal to SNET 650, alerting some or all members of SNET 650 that the social security device has triggered an alarm. The warning signal can be directed to any member of SNET 650, some members, or the like, such as any devices 606 or accounts 608 associated with members of the household environment 600, one or more security companies 660, emergency services 670, and the like.

Where social safety device 620 is a smoke detector which detects smoke, it may send a warning signal to an SNET 650, or an SNET group 603 which may or may not be dedicated to smoke detectors, social devices in the particular household environment, or the like. The warning signal can be received by members of the SNET 650 or SNET group, including, without limitation, emergency services, insurance providers, repair services, devices 606 or accounts 608 associated with members of the household environment 600, and the like. In addition, participants in SNET 650, SNET group 603, and the like can, in some embodiments, interact with social devise in household environment 600, even if not presently within the environment. For example, where a social security device 610 such as a security device activates, a security company 660 that receives a warning signal from the social security device 610 via SNET 650 may command the social security 610 to activate a local CCTV camera in the household environment 600, activate some other social device 630, or may activate the additional social device itself. In addition, when a social safety device 620, such as a smoke alarm, is triggered, a member of the household environment 600, upon receiving a warning signal from the social safety device 620 via SNET group 603 at device 606, may command additional social devices 630 that may contribute to a fire to shut down, including, without limitation, a home gas line. To this end, certain devices may be grouped in SNET groups to help facilitate actions involving multiple devices simultaneously. For example, in the above scenario, where all socially-aware devices 630 that may contribute to a fire, such as cooking appliances, a gas line, a gas heater, or the like, may be grouped together in an SNET group, such that, upon receiving a certain warning, a household environment member can send a command to all of the devices in the group in one action, such as a command to shut down.

In some embodiments according to the disclosure, an insurance provider 680, repair service 690, or the like participates in an SNET 650 in order to view and verify driving behavior histories/data and possibly offer discounts relating to same. The company can, for example, interact with one or more automobile social devices 694 located in one or more automobiles, automobile environments 692, or the like. In the event of a certain event concerning the automobile environment 692, social automobile device 694, or the like, a message can be sent, directly or via SNET 650, to certain members of SNET 650. For example, if the automobile environment 692 is involved in an accident, social automobile device 694 can transmit a message to SNET 650 that can be distributed to emergency services 670, an insurance provider 680, a repair service 690, one or more individual household accounts 608 or devices 606 associated with the automobile environment on SNET 650, some combination thereof, or the like.

In some embodiments, interactions between a device and an SNET group are managed by one or more users. Such interactions can support aspects associated with one or more SNET groups. A member of the SNET, who may be part of one or more household accounts 608, have control, access, or the like to a device within household environment 600, some other device 606, 694, or the like, can manipulate interactions between the account 608, a device associated with the account 608, or the like. For example, a member of the SNET group can manipulate access by other members of the SNET group to information, functional elements, or the like associated with one or more devices under the SNET member's control. Where an SNET group is associated with a local neighborhood watch program, a user may enable some or all members of the SNET group to access information from one or more devices. Such access can include, without limitation, instructing a device to interact with the SNET group, instructing a device to upload information to the SNET group, permitting selected SNET group members to access information, functional elements, or the like from the device directly, some combination thereof, or the like. Instructing a device to interact with one or more SNET groups can include associating an account 608 with an SNET group, where the account includes access to one or more aspects, functional elements, or the like associated with a device. For example, where an SNET group is associated with a local neighborhood watch program, a user that is a member of an account 608 can authorize interaction between a device 610 and the SNET group such that information collected, generated, or the like by the device 610 can be provided to the SNET group, provided to some or all members of the SNET group, or the like.

In some embodiments, a user associated with one or more devices device 694, 610, 620, 630, one or more accounts 608, some combination thereof, or the like can authorize some or all SNET group 603 members to interact with the device to request information from the device 610, access one or more functional elements associated with the device 610, some combination thereof, or the like. For example, where an SNET group 603 is associated with a local neighborhood watch program, a user can authorize a security device 610 to provide information including, without limitation, a video feed, motion detection information, and the like to the SNET group 603. In some embodiments, the information provided to the SNET group 603 by a device can be accessed, analyzed, and interpreted by one or more members of the SNET group 603. For example, where one or more devices 610 provide video feed information to an SNET group 603, a device, infrastructure, SNET group 603 member, some combination thereof, or the like can analyze the provided information to track movement of individuals in a general location, monitor for emergencies, some combination thereof, or the like.

In some embodiments, a user can change authorizations for device interactions with an SNET group 603 on the fly and in response to one or more events. For example, a user in an account 608 that is associated with an SNET group 603 associated with a local neighborhood watch program, upon receiving a warning from the SNET group 603 of suspicious activity in the neighborhood, can change an authorized interaction of a device 610 such that the device, which was previously not authorized to provide information to the SNET group 603, is now authorized to provide information to the SNET group 603. Where the device 610 is a security camera, the user may respond to the warning by authorizing device 610 to provide a live video feed to the SNET group 603 so that members of the SNET group 603 can use the video feed to monitor for suspicious activity. Warning notifications can be generated by one or more members of the SNET group 603, an infrastructure that generates a notification in response to analysis of information provided from one or more devices, some combination thereof, or the like.

In some embodiments, a user can manage interactions between a device and an SNET group 603 on the fly. For example, a user can be in an automobile environment 692 and receive a notification of an event including, without limitation, a child abduction. The notification can be received from an SNET 650, or via another communication pathway, and the notification can include information associated with a vehicle of interest including, without limitation, license plate information, vehicle color, make, model, some combination thereof, or the like, and where the social automobile device 694 includes a mechanism, functional element, or the like which can collect information regarding the surrounding environment, the user can join an SNET group 603 associated with the event and authorize the social automobile device 694 to interact with the SNET group 603 such that one or more members associated with the SNET group 603 can have access to information provided by the social automobile device 694, one or more functional elements associated with the social automobile device, some combination thereof, or the like. For example, where the social automobile device 694 includes a camera device which can take pictures of license plates of other automobiles on the road, the user can authorize the device 694 to interact with an SNET group 603 such that pictures of other automobile license plates taken by the device 694 are provided to the SNET group 603 for viewing, analysis, and the like by other SNET group 603 members. The user can, in some embodiments, authorize multiple devices to interact with the SNET group 603. For example, the user can authorize a GPS device in the automobile environment 692 to provide location information associated with the automobile environment 692 upon request from one or more members of the SNET group 603, upon transmission of information from the social automobile device 694, at some other interval, or the like. For example, where a social automobile device 693 that includes a camera in an automobile environment 692 captures an image of a license plate that matches a description associated with the SNET group 603, one or more members of the SNET group 603 can receive, request and receive, or the like location information associated with the automobile environment 692 at the time the image was taken, thereby enabling an SNET member to track the automobile having the matching license plate as one or more social automobile devices 694 in one or more automobile environments provide images of the matching license plate.

In some embodiments, the user can create an SNET group 603 for a device to interact with on the fly. For example, where a user riding in an automobile environment receives a notification of a child abduction, the user can, via one or more devices 606, 694, or the like, create an SNET group 603 associated with the child abduction in SNET 650 and invite other members, nonmembers, and the like associated with SNET 650 to join the created SNET group 603. The user can authorize one or more devices, including without limitation, a social automobile device 694, a device coupled to the social automobile device, a household member device 606, some combination thereof, or the like to interact with the SNET group 603 to enable one or more members of the SNET group 603 to analyze information provided to the SNET group 603 to search for, identify, and track individuals, vehicles, or the like associated with the child abduction warning.

In some embodiments according to the disclosure, a member of an SNET can desire to share images or other social media with family, photographers, friends, artists, etc. For example, a member may be dining at a restaurant in Athens and capture photos or video via a social camera docked within a social sharing network. Such a sharing network can include SNET groups and sub-groups, such as a group being Travel, a sub-group for Europe; a sub-sub-group for Greece; a sub-sub-sub-group for Athens; and a sub-sub-sub-sub-group for restaurants. By joining such a restaurant sub- group, a member can gain access to restaurant reviews and information and/or consume previously captured media and offer up the member's like contributions to others. Sharing information with others can be based upon similar aspects. For example, the ability of other SNET users, SNET group members, and the like to access information included in an SNET sub-group can be determined by one or more aspects of the SNET group member, including, without limitation, proximity by a device supporting one SNET group member to a device supporting the SNET group member uploading the information, common membership in a certain other SNET group, some combination thereof, or the like.

In some embodiments, a social picture/video frame can be an outlet for displaying social content such as video. The relevant SNET can extend beyond the actual dedicated frame to software supporting display of social content on a television, computing device, or any other social device (including social communication devices). SNET operation in accordance with such embodiments can further be associated with a map/location, such that a group of photos from various social cameras within or beyond a SNET group might be queued up for display, along with metadata supporting future or current travel (e.g., GPS location, map routing, etc.). For example, a member's social picture frame might have a map view from which SNET participants can enter a center point, SNET group, country or region. Thereafter, the SNET can provide relevant feeds, which can periodically change. Media feeds can be my own, my family, or world-wide submissions. Such images might also be pictures of people so as to offer up an introduction infrastructure. For example, a member may see someone interesting on the feed and press the frame screen to obtain further information and perhaps request an introduction.

In some embodiments, an SNET is established to support gaming/gambling activities. For example, an SNET can comprise either a persistent SNET or an ad hoc SNET group, and provide for purchase or transfer of gaming "credits" including, without limitation, NFC support for credit purchasing. Further, an online game itself can be established and set up using social devices, etc.

In accordance with the disclosure, various techniques (such as techniques described elsewhere herein) can be employed to determine the existence and location of SNET/SNET group members and their associated social devices. Such location information can be utilized in a variety of ways including, but not limited to, those described below. For example, SNET location services could utilize one or more of the following standards: GPS, LTE eNB, (IP) address, NFC (Near Field Communication), Bluetooth, WiFi, infrared, etc., and, of course, account metadata. Cloud-based storage can be utilized for various information, including location (e.g., GPS), to extend social network functionalities (for example, automatic SNET grouping/introductions, automatic servicing/selection of peripheral devices, etc.). Location-based groups might also be formed for travel, tracking, invites (and timeouts), etc. Location data, as well as other factors, can also be used, in some embodiments, to select online gaming competition/teams. For example, IP address selection can be conducted in a DNS-like manner for a relevant domain name. In operation, a SNET/SNET group of game players or the like can be formed based on location factors, SNET/SNET group attributes, network attributes, some combination thereof, or the like.

Various embodiments of a SNET group according to the disclosure can comprise a wide variety of social devices, device services, proxies, and software applications of various types participating as SNET group members. Further, social devices and other types of SNET group members having related or specific characteristics and interdependencies may form SNET groups having specific purposes. Various embodiments may comprise, for example, SNET/group members such as device manufacturers, automobile owners, hospitals and medical providers, repair shops, insurance companies and other third parties that might have an interest in communicating with a human member and/or associated SNET devices. Such SNETs/groups may be stand-alone or an extension of other SNETs/groups.

Some embodiments of an SNET group according to the disclosure may comprise a wide variety of social devices, device services, proxies, and software applications of various types participating as SNET group members. Further, social devices and other types of SNET group members having related or specific characteristics and interdependencies may form SNET groups having specific purposes. Various embodiments may comprise, for example, SNET/group members such as device manufacturers, automobile owners, hospitals and medical providers, repair shops, insurance companies and other third parties that might have an interest in communicating with a human member and/or associated SNET devices. Such SNETs/groups may be stand-alone or an extension of other SNETs/groups.

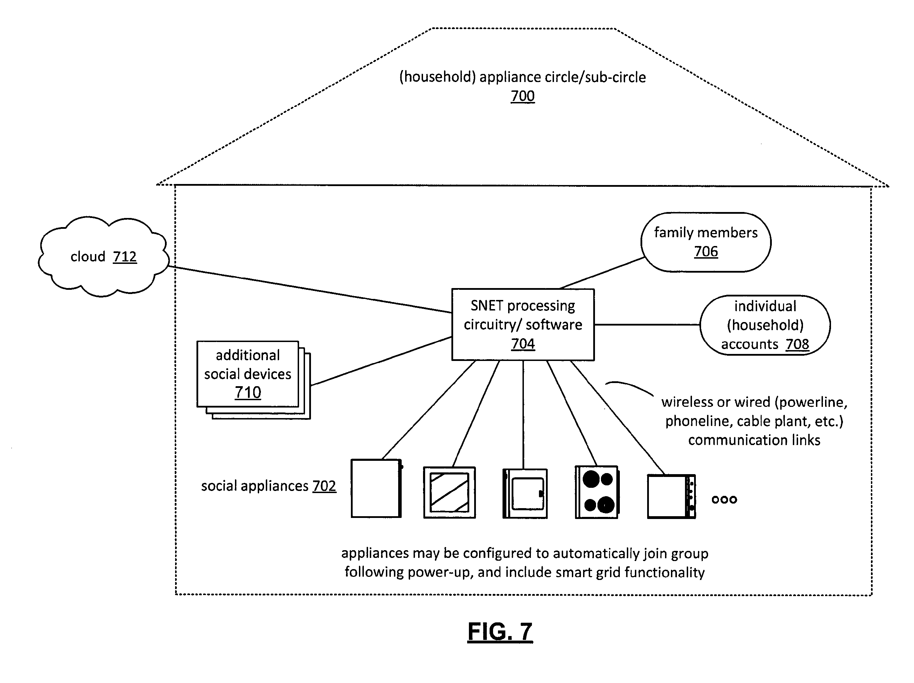

FIG. 7 illustrates an embodiment of an appliance social network group/sub-group in accordance with the disclosure. In this embodiment, an appliance group/sub-group 700 comprises a wide variety of (household) appliances/electronics ("social appliances" 702) that may include, without limitation, washing machines, dryers, refrigerators, televisions, STBs, thermostats, networking equipment, etc. Membership in the appliance group/sub-group 700 allows for a variety of interactions with or between such social appliances 702, including setup and configuration (as generally described above), testing, registration, firmware and driver updates, sharing, status updates including power consumption information, power company integration, location information sharing, formation of sub-groups of social appliances, permissions management, etc.

Such interaction, including communications with various social devices 710 and family members 706 participating in the appliance group/sub-group 700, are facilitated through SNET processing circuitry/software 704. In addition, interaction between individuals and nodes in the appliance group/sub-group 700 may be enabled through individual (household) accounts 708. Interactions with authorized non-members may also occur through cloud 712 communication channels or other networking paths utilized by the appliance group/sub-group 700.

With respect to certain contemplated social appliances 702 such as smoke detectors, carbon dioxide detectors, alarm system systems and other security devices, automated SNET functionality may be implemented to place automated calls or notifications to family members or emergency response entities (fire departments, law enforcement personnel, etc.) following detection of a safety event. Nearby residences may likewise receive such notifications.

When a new social appliance 702 joins an appliance group/sub-group 700, the SNET processing circuitry/software 704 or like functionality may determine the model/sub-model of the appliance, deliver software updates, configure operational modes, etc. Further, the appliance may receive or provide profile information relating to the appliance or other members of the appliance group/sub-group 700. Bidirectional communications with an appliance SNET group may occur through a powerline/phoneline/cable plant communication system (e.g., via Internet pathways, power company powerlines, or other specified communication pathways). Smart grid functionality and interactions may similarly be conducted through Zigbee, WiFi, NFC, LTE, IMT-Advanced/4G and/or other applicable protocols.

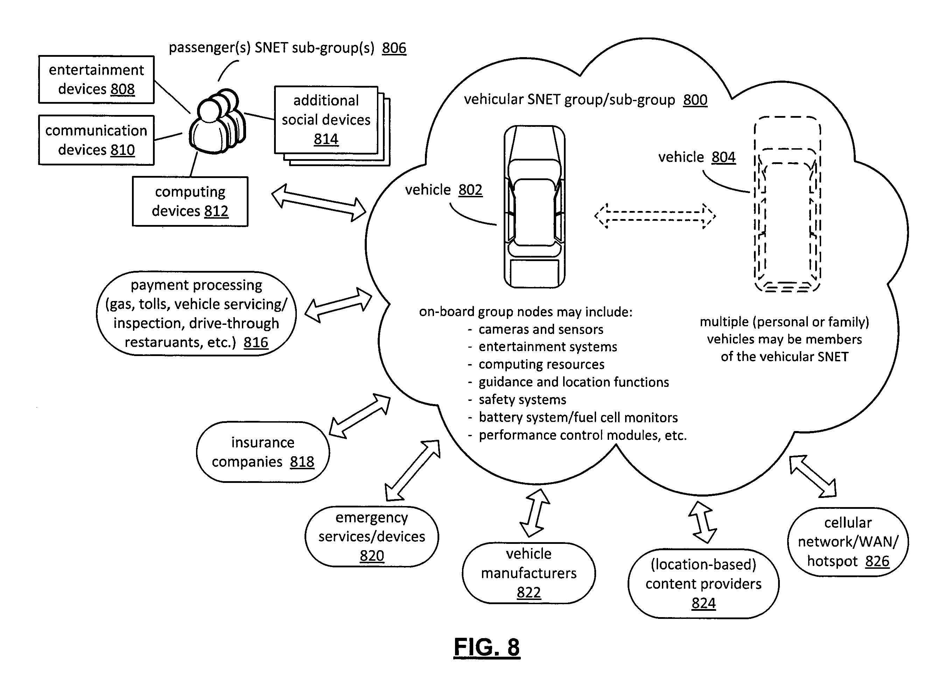

FIG. 8 illustrates various embodiments of a vehicular SNET group/sub-group 806 in accordance with the disclosure. The SNET group/sub-group 806 includes a vehicle 802, and may further include one or more additional vehicles 804, such as co-owned or family vehicles. Various other devices, SNET sub-groups, service and content providers, providers, entities, may participate in the in the vehicular SNET group/sub-group 806. In another embodiment, a vehicular SNET sub-group 800 may itself join another SNET group (e.g., an owner or passenger SNET group).

More particularly, membership in the vehicular SNET group/sub-group 806 may comprise a passenger SNET sub-group 806 comprised of a human member and associated entertainment devices 808, communication devices 810, computing devices 812 and additional social devices 814. Other participants might include, for example, payment processing services (for automated remunerations for gas, tolls, vehicle servicing/inspection, drive-through restaurants, etc.), insurance companies 818, emergency services/devices 820, vehicle manufacturers 822, and (location-based) content providers 824. Various nodes of vehicular SNET group/sub-group 806 may include interfaces for communications through a cellular network, WAN or mobile hotpot 826 and the like. Various usage models include, for example, proximity-based activation of SNET group nodes such as garage door openers, environmental controls, etc. In addition, an insurance company may participate in order to, for example, view and verify driving behavior histories/data and possibly offer discounts relating to same.

A vehicle 802 according to the disclosure may be an automobile, bus, train, industrial or agricultural vehicle, ship, or aircraft. Vehicular nodes/modules in accordance with the disclosure may control specific components relating to respective functionality. Such on-board group nodes may include, for example, cameras and sensors, entertainment systems, environmental controls, computing resources, guidance and location functions, safety systems, braking and suspension systems, battery system/fuel cell monitors, emissions control modules, performance/engine control modules, etc. Various such vehicle group nodes may be configured to communicate with one another.

Communications between modules and members of a vehicular SNET group/sub-group 800 can be conducted, at least in part, over a vehicle network using a standard protocol such as Vehicle Area Network (VAN) or Controller Area Network (CAN). A number of specialized protocols have been developed and are currently employed for vehicular communications, but it is anticipated that many of these protocols will eventually be displaced by more conventional networking technologies such as Ethernet and TCP/IP. Communications in a vehicular SNET group/sub-group 800 may employ wireless communication technologies, and/or physical transmission media such as single wire and twisted pair cabling, fiber optics, power line communications (e.g., power grid connections via a charging station for battery powered vehicles), etc.

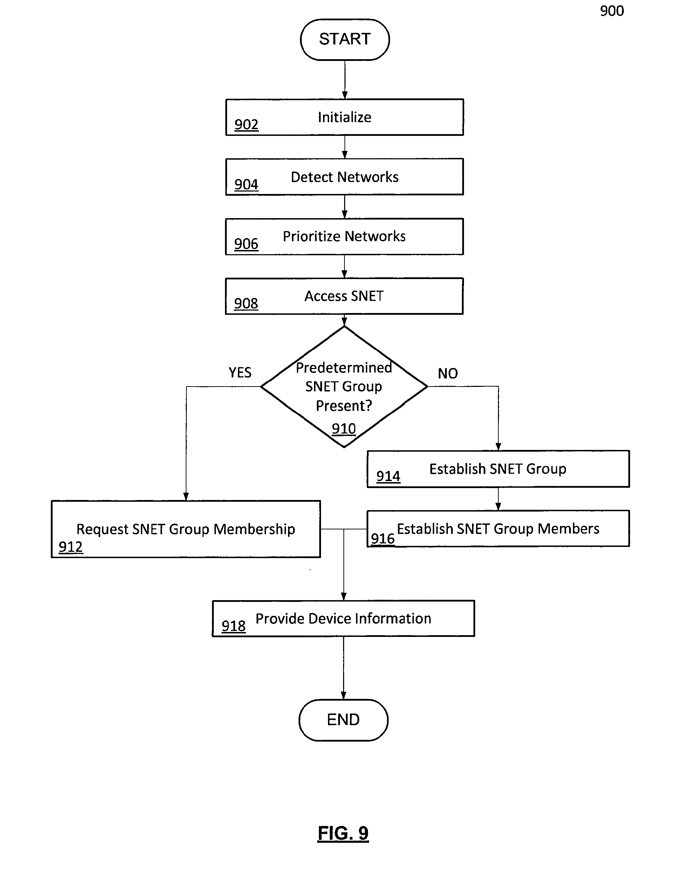

FIG. 9 illustrates a process 900 by which a device can interact with an SNET group to which it is docked directly, indirectly via another SNET group to which it is docked, some combination thereof, or the like. As shown in block 902, process 900 can include a device initializing. Initialization can include, without limitation, powering on, activating one or more functional elements, or the like. As shown in block 904, process 900 can include detecting one or more networks. The device, in some embodiments, can interact with various networks including, without limitation, a wired LAN, WLAN, cellular network, some combination thereof, or the like. The detecting of networks can occur upon initialization of the device, continuously, intermittently, at predetermined intervals, some combination thereof, or the like. As shown in block 906, process 900 can include prioritizing detected networks, infrastructures, or the like. The device, having detected multiple networks, can prioritize which networks are to be utilized to interact with one or more SNETs, devices, some combination thereof, or the like. For example, a device can prioritize a WLAN network over a cellular network, such that the device will attempt to use the WLAN to access one or more SNET groups or other devices; in the event of a power failure or some other interruption of service via the WLAN, the device can switch to another network, such as the cellular network, to maintain or reestablish a connection with an SNET, one or more devices, or the like. Prioritization of networks can be accomplished according to one or more rules, which can be stored by the device, received from a remote source, or the like. For example, a device can prioritize networks according to an internal rule; the rule can be replaced with an updated rule received by the device via a network connection. A rule upon which networks are prioritized can include, without limitation, connection speed, security, likelihood of connection interruptions, likelihood of connection failure, some combination thereof, or the like.

As shown in block 908, process 900 can include accessing one or more SNETs, SNET infrastructures, SNET groups, devices, some combination thereof, or the like. The accessing can be accomplished via one or more of the networks detected in block 904. The device can, in some embodiments, seek out certain SNETs according to predetermined information. For example, the device can have internally-stored information that identifies one or more specific SNETs that the device is to seek out, upon connecting with one or more networks, to join or establish an SNET associated with the device. A list of SNETs in the information can be prioritized, such that the device will seek out certain SNETs before others according to one or more rules. The list of SNETs can be revised over time based upon the device's interaction with other devices, upon receipt of updates from a remote location, some combination thereof, or the like.

As shown in block 910, process 900 can include determining whether a located SNET includes a predetermined SNET group. The device can, in some embodiments, include information that identifies one or more predetermined SNET groups that the device is to seek out and join. Such a predetermined SNET group can include, without limitation, an SNET group for like devices, an SNET group for like devices within a certain geographic area, some combination thereof, or the like. Like devices can include, without limitation, devices associated with one or more similar aspects, functional elements, characteristics, properties, locations, or the like, devices related in some manner to a similar purpose, physical devices that can interact with a network, some combination thereof, or the like. For example, a manufacturer of smoke detectors that can interact with a network may maintain an SNET group for some or all of its manufactured smoke detectors. The manufacturer may enable some or all of its smoke detectors to seek out and join its SNET group by providing the smoke detectors with information, including, without limitation, a Uniform Resource Locator (URL) address associated with the SNET, an identifier of the SNET group, some combination thereof, or the like. In another example, one or more SNET groups may serve various appliances that are physically located within various certain locations, which can include, without limitation, a kitchen, a certain room, a certain structure, a geographic location, some combination thereof, or the like. One or more of the appliances may have information that identifies an SNET group that the appliance is to seek out based upon the appliance's geographic location.

As shown in block 912, upon determining that a predetermined SNET group is found, the device can request membership in the predetermined SNET group. Membership can include docking the device with the SNET group, docking an SNET group to which the device is docked to the predetermined SNET group, some combination thereof, or the like. In some embodiments, the device can request the SNET to add the device as a member of the SNET group, request an existing member of the SNET group to accept the device as a member of the SNET group, provide a password code for membership of the SNET group, some combination thereof, or the like. A password code can be internally stored by the device, received from another device, some combination thereof, or the like.

As shown in blocks 914-916, process 900 can include the device establishing an SNET group. The establishment of an SNET group can occur in response to determining that no predetermined SNET groups are present, detecting one or more SNETs, some combination thereof, or the like. For example, in some embodiments, the device does not know of any predetermined SNET groups and can create its own SNET group upon interacting with an SNET via a network connection. The device can request the SNET to create an SNET group, create the SNET group itself, some combination thereof, or the like, as shown in block 914, and can provide information related to the SNET group, such as a desired name for the SNET group, selected information to be accessible to one or more selected members of the SNET group, rules associated with interaction between members of the SNET group, some combination thereof, or the like. As shown in block 916, process 900 can include establishing members of the SNET group. In some embodiments, the device can request certain entities be added to the SNET group including, without limitation, another device associated with the device, a device supporting a member of the SNET, a device supporting a nonmember of the SNET, a member of the SNET, a nonmember of the SNET, some combination thereof, or the like. For example, a home security device establishing an SNET group for the device can request that a resident of the home in which the security device is located be added to the SNET, along with a local police service, local security service, some combination thereof, or the like. Where a nonmember is to be added as a member of the SNET group, the device can request the SNET to send an invitation to join the group to the nonmember, such that the nonmember can become a full member of the SNET group, a guest member of the SNET group, some combination thereof, or the like. Invitations to an SNET can be performed as discussed in U.S. Utility Patent Application Serial No. 13/351,822, entitled "Ad Hoc Social Networking," (Attorney Docket No. BP23785), filed 01-17-2012, pending, which is hereby incorporated herein by reference in its entirety.

In either process shown in blocks 912 and 916, the device can establish docking specifications that govern interactions between the device and one or more SNET groups, members of the SNET group, or the like. For example, where the device is a security device that is being docked to a predetermined SNET group, the device can establish a docking specification that restricts access by some or all other members of the predetermined SNET group without prior authorization by a user of the security device, or the like. The docking specification may be created by the device, by the SNET group based upon inputs received by a user associated with the device, the SNET group based upon inputs received from another member of the SNET group, internal logic, some combination thereof, or the like.

As shown in block 918, process 900 can include providing information associated with a device to the SNET group. The information can be associated with one or more functional elements of the device, one or more functional elements of another device, contact information of the device or some other device, a notification, some combination thereof, or the like. For example, a security device can provide a video feed from a security camera, local data regarding whether the local environment is occupied, data from a motion sensor, or the like. A smoke alarm can provide temperature data, air composition data, or the like. A device located in an automobile can provide data regarding the car's current velocity, speed, location, fuel consumption rate, diagnostic information, some combination thereof, or the like.

The information can be made accessible to one or more selected members of the SNET group according to one or more rules, docking specifications, or the like. For example, a device located in an automobile can provide diagnostic information to the SNET such that the diagnostic information is accessible to a maintenance service that is a member of the SNET group and provide data regarding the automobile's current velocity and location such that the data is accessible only to a certain selected member of the SNET group including, without limitation, the owner of the automobile. In another example, a device can be authorized to provide only limited access by an SNET group to data from the device unless and until a user associated with the device alters the docking specification to permit the access, the SNET group may be authorized to receive data from a device, access the device, make requests of the device, or the like as authorized by a docking specification governing one or more links with the device.

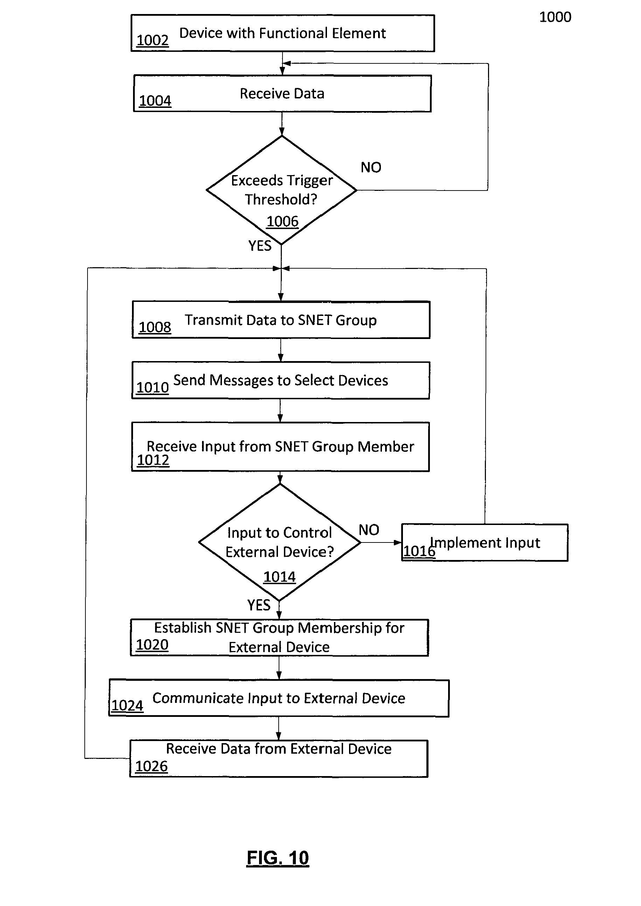

FIG. 10 illustrates a process 1000 in which at least some part of a device interacts with one or more capabilities of an SNET group. The SNET group can be a group that the device has joined, established, docked with directly, docked with indirectly via one or more of a device and SNET group, or the like. As shown by block 1002, the device, in some embodiments, is a device having one or more functional elements. A functional element can include, without limitation, a sensor, which can collect information about an environment, generate information about an environment, some combination thereof, or the like. The environment can be a specific environment proximate to the sensor, some other device, a user-defined environment, some combination thereof, or the like. For example, a device can include a camera, a thermometer, a motion sensor, an air composition detector, some combination thereof, or the like. The device can be communicatively coupled to one or more SNET groups via one or more networks.

As shown in block 1004, process 1000 can include receiving data. The data can be received at a part of a device, including, without limitation, a processing circuitry of the device. The data can be generated by a functional element of the device discussed in block 1002, received from another separate device, or the like. The data can include output from the functional element. For example, a smoke detector device can receive data from one or more functional elements in the smoke detector regarding the local environment, such as local air temperature and composition. In another example, a security device can receive data from a security camera that includes a video feed, data from a motion detector that indicates whether the motion detector detects motion, some combination thereof, or the like.

As shown in block 1006, process 1000 can include analyzing received data to determine whether a trigger threshold is exceeded. The device can analyze the data against a stored set of rules to determine if one or more thresholds is exceeded, against a set of rules received concurrently from one or more functional elements within or without the device, or the like. The functional elements may perform the analysis and provide notifications to another part of the device upon determining whether the functional data exceeds one or more thresholds. In some embodiments, a trigger threshold is related the functional element. For example, a part of a smoke detector may analyze data from a functional element of the smoke detector to determine whether smoke is present in the local environment; the part of the smoke detector can analyze air composition data to determine the presence of smoke, where at least a certain air composition indicates that smoke is present. In another example, a device located in an automobile can analyze data related to the automobile's velocity to determine whether a threshold velocity is exceeded, or the like.

As shown in blocks 1008 and 1010, process 1000 can include, upon determining that a threshold is exceeded, transmitting data to an SNET group, transmitting messages to select one or more devices, users supported by devices, or the like. The SNET group can include an SNET group associated with one or more devices, a local geographic region, a certain one or more SNET users, some combination thereof, or the like. For example, a smoke detector, upon determining that smoke is present in the local atmosphere, can transmit data to an SNET group associated with smoke detectors in a certain geographic region. Data transmitted to the SNET group can include a notification that a certain smoke detector at a certain location has detected smoke, along with functional data from one or more functional element of the smoke detector, such as air composition data. Some or all of the transmitted data may be made accessible to one or more selected members of the SNET group, transmitted directly to the selected SNET members as or along with a notification, transmitted to other proximate devices that are also members of the SNET group, nonmembers of the SNET group, come combination thereof, or the like. For example, a notification of smoke detected transmitted by one smoke detector to an SNET group associated with smoked detectors can be made accessible to all members of the SNET group, and a notification of the smoke detection can be transmitted to a member of the SNET group that is a local fire station, emergency dispatcher, occupant of the building in which the smoke detector is located, some combination thereof, or the like. The notification can include data from the smoke detector, another proximate device, or the like. In another example, a notification of motion detected, received by a security device and determined to exceed a trigger threshold, can be transmitted to an SNET associated with security devices serviced by a particular security company, such that a notification of the trigger threshold being exceeded is transmitted to the security company, a local emergency dispatcher, a resident of the building in which the security device is location, some combination thereof, or the like.

As shown in block 1012, process 1000 can include receiving control input from one or more members, applications, services, or the like associated with an SNET group. In some embodiments, an SNET group member may have access to one or more elements of a device such that the SNET group member can request data from the device, interact with the device, interact with a separate device via the device, some combination thereof, or the like. The interaction can be conditioned, by a docking specification, or the like, upon the SNET group member first receiving a certain notification, signal, or the like from the device. For example, where a smoke detector device detects smoke in the air and transmits a notification of the smoke detection to an SNET group, such that one or more members of the SNET group receives a notification that the smoke detector has detected smoke, the one or more members of the SNET group may be able to respond to the notification by interacting with the smoke detector. Such interaction can include, without limitation, requesting additional data from one or more functional elements of the device or another device, accessing one or more functional elements of the device or another device, some combination thereof, or the like. For example, a local emergency dispatcher can respond to a notification that a smoke detector has detected smoke by requesting local temperature data from the smoke detector, another device in proximity to the smoke detector, or the like. The dispatcher can request access to a live video feed from a proximate security camera to search for evidence of smoke. In another example, an emergency dispatcher can respond to a notification that a security device has received a motion detection by accessing a proximate security camera to search for a source of the motion detection.

As shown in blocks 1014 and 1016, where the input is for at least some part of the device receiving the input, process 1000 includes at least some part of the device implementing the received input. The implementation can include one part of the device sending a command, signal, message, or the like to another part of the device. The implementation can include translating a command received from an SNET group member into a command that can be interpreted and executed by one or more separate elements of the device.

As shown in block 1020, process 1000 can include responding to a determination that an input from an SNET group member includes a signal intended for another device by establishing a membership of the other device in one or more SNET groups, which can include the same SNET group to which the SNET group member belongs. Such a membership, association, docking link, and the like can be temporary, time-limited, revocable by the device, SNET, one or more SNET group members, some combination thereof, or the like. Such a membership of the external device can enable one or more members of the SNET group to have access to data, a functional element, or the like associated with the external device. Access can be routed through the device that originally receives the input in block 1012, or via another pathway. For example, an SNET group member may respond to a notification of smoke detection at a location by requesting access to a security camera proximate to a smoke detector that detected smoke. The request for access may be routed through the smoke detector, directly to the security camera, some combination thereof, or the like. The smoke detector may respond to the request by establishing a temporary membership by the security camera in the SNET group, such that the security camera can provide data, be accessed, or the like from one or more members of the SNET group. As shown in blocks 1024-326, process 1000 can include communicating an input to the external device and receiving data from the external device. The input can be communicated to the external device based upon functional elements of the external device. For example, a smoke detector can, upon receiving a request from an SNET group member for air temperature data, route the request to a proximate thermometer. The request from the SNET group member can explicitly request temperature data from the thermometer; the request can also be a request for temperature data from any proximate device, where the smoke detector routes the request to one or more proximate thermometers. The request may be translated as necessary to be interpreted, executed, or the like by one or more elements of one or more separate devices. For example, the smoke detector may translate a general request for temperature data into a command signal for a certain thermometer to provide temperature data. As shown in block 1026, data from one or more external devices can be received by the device communicating the input. The received data can be forwarded to the SNET group, analyzed by the device alone or in combination with one or more other functional elements, some combination thereof, or the like. The data can be communicated directly to one or more SNET groups, bypassing the device. For example, where a smoke detector has established a temporary SNET group membership to a thermometer, the thermometer can transmit temperature data directly to the SNET group without routing the data through the smoke detector. The data can also be routed through the smoke detector without requiring that the smoke detector analyze the temperature data. Where the thermometer does not have an SNET group membership, the thermometer can transmit temperature to the smoke detector, which can send the data to the SNET group to be accessed by one or more SNET group members, analyze the temperature data in combination with other data, some combination thereof, or the like.

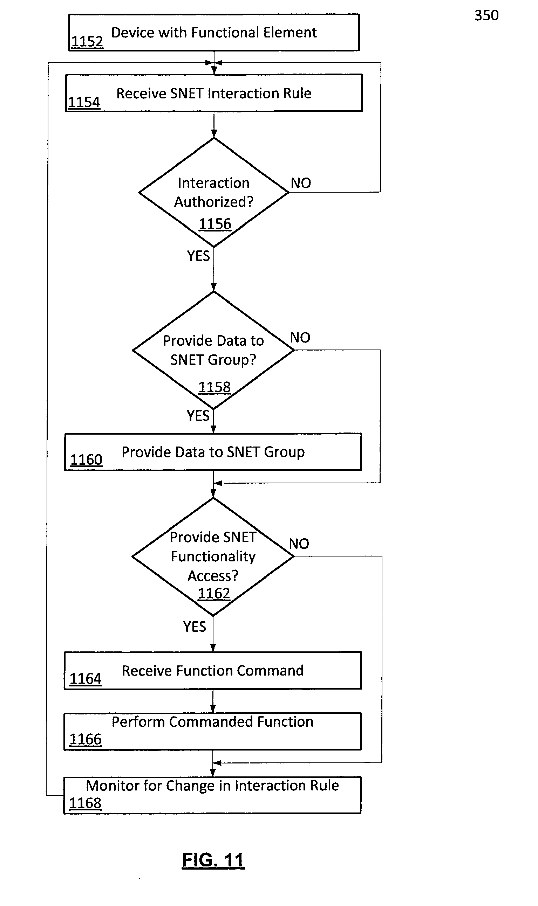

FIG. 11 illustrates a process 1150 that can be performed by a device having a functional element, as shown in block 1152. In some embodiments, the device is capable of interacting with an SNET via one or more network connections, as authorized by a user of the device. As shown in block 1154, process 1150 can include receiving a rule regarding interactions with an SNET group. The rule can include a rule for interactions with one or more SNET groups, a docking specification governing a docking link with the SNET group, some combination thereof, or the like. The rule can be received from an input from a user of the device via an interface of the device, via a signal from another device supporting the user, via a signal from a remote device over a network, from an SNET group, from one or more capabilities of the SNET group, from an SNET infrastructure, SNET system, the SNET, some combination thereof, or the like. The rule can limit or permit various levels of interaction between the device and one or more SNET groups in an SNET. For example, the rule may restrict the device from providing any information to any of the SNET, one or more SNET groups, or the like. The rule may also permit limited information transfer between the device and the SNET, SNET group, and the like. The rule may permit interaction between one or more functional elements of the device and some or all of an SNET, SNET group, one or more members of the SNET group, some combination thereof, or the like.

As shown in block 1156, process 1150 can include determining whether an interaction rule authorizes an interaction between the device and an SNET. The interaction can include interacting with some or all of one or more SNET groups. If an interaction is authorized, process 1150 can include determining whether the device is authorized to provide data to one or more SNET, SNET group, SNET group member, SNET group nonmember, some combination thereof, or the like, as shown in block 1158. As shown in block 1160, if the device is permitted to provide data to one or more of an SNET, SNET group, SNET group member, SNET group nonmember, some combination thereof, or the like, the device can provide data as authorized. Data provision illustrated in block 1160 can include providing data from one or more functional elements to some or all of one or more SNET groups, as determined by the received interaction rule. For example, where a device includes a camera, and a received interaction rule authorizes the device to provide pictures taken by the camera to a selected SNET group, the device can provide the data to the SNET group.

As shown in block 1162, process 1150 can include providing functionality access to one or more SNET, SNET group, SNET group member, SNET group nonmember, some combination thereof, or the like, as determined by the received SNET interaction rule. Functionality access can include, without limitation, access to one or more functional elements associated with a device. For example, where a device is located in an automobile, functional elements associated with the device can include, without limitation, a digital camera device, a GPS location device, or the like. If access is authorized, as shown in blocks 1164-366, the device can receive function commands and perform a commanded function. For example, where the device includes a camera, and the received interaction rule authorizes functionality access by a member of an SNET group, the device can instruct the camera to take a picture upon request by an SNET group member.

In some embodiments, access to a functionality can be restricted to selected portions of an SNET, SNET group, SNET group membership, network users, some combination thereof, or the like, as authorized by the received interaction rule. For example, the interaction rule may authorize only certain members including, without limitation, local authorities to access functionalities associated with the device. As shown in block 1168, process 1150 can include monitoring for any change in the interaction rule. Such a change can occur when a new interaction rule is received that replaces the previously-received interaction rule, when an update to the interaction rule is received, when the interaction rule is overridden by an authorized user, when the interaction rule is updated or altered by an authorized user, some combination thereof, or the like.

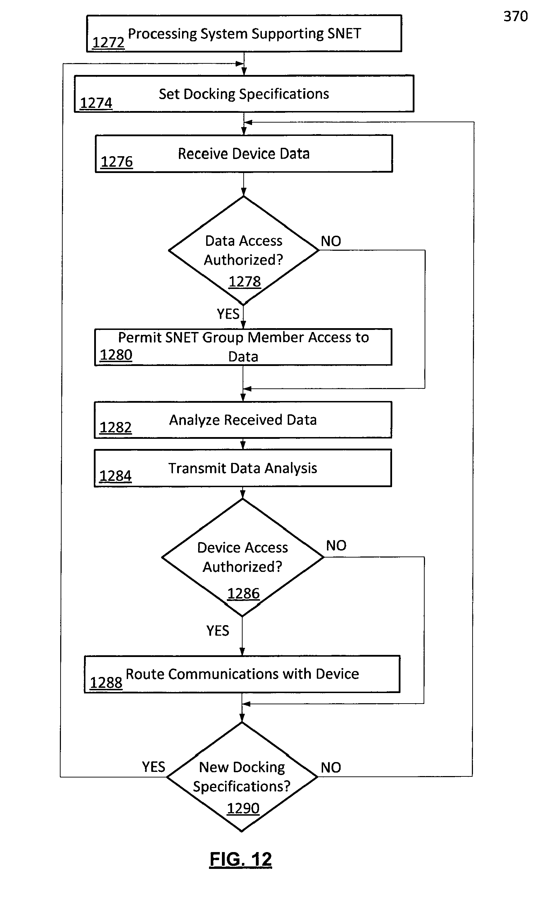

FIG. 12 illustrates a process 1270 which can be performed by a processing system, server device, remote device, network node, SNET infrastructure, SNET system, SNET, some combination thereof, or the like. In some embodiments, the processing system supports some or all aspects of an SNET including, without limitation, storing information provided to the SNET, one or more SNET groups, or the like, receiving interaction rules, docking specifications, or the like from one or more SNET members, nonmembers, or the like, establishing docking specifications, managing docking specifications, facilitating interactions between SNET members, SNET nonmembers, devices, one or more functional elements associated with a device, information provided to the SNET, some combination thereof, or the like. For example, a processing system can allow a user to set interaction rules that determine what information, interactions, device functionalities, or the like associated with the user can be accessed by other SNET members, which SNET members can achieve such access, and the like.

As shown in block 1274, process 1270 can include setting interaction rules, docking specifications, some combination thereof, or the like for links between one or more SNET groups, SNET infrastructures or the like and one or more accounts, SNET groups, devices, and the like associated with a user, SNET infrastructure, or the like. The user can be a member of the SNET, a member of one or more SNET groups, a nonmember of the SNET accessing the SNET as a visitor, some combination thereof, or the like. Docking specifications can be set, in part or in full, by one or more of the processing system, the user, an account associated with the user, a device supporting the user, an SNET group, some combination thereof, or the like. For example, an SNET member that is a member of an SNET group for a neighborhood watch program may set docking specifications directing the processing system to allow a security device associated with the SNET member's account to provide information, such as a video feed, to the SNET group, but to restrict access to the information to only selected members of the SNET group, such as a next-door neighbor, of the SNET member, a trusted friend, or the like. In some embodiments, the docking specifications can be changed, updated, altered, or the like at any time by the user, by the SNET member, by the processing system, in accordance with a predetermined rule, in accordance with some internal logic, some combination thereof, or the like. For example, the SNET member can provide, as one or more of the docking specifications, that access to information provided by the device associated with the SNET member's account can be extended to some or all of the members of the SNET group upon the detection of a certain one or more trigger events including, without limitation, a notification of an alarm, emergency, disturbance, or the like in a certain proximity of the SNET member's residence.

As shown in block 1276, process 1270 can include receiving data from the device. Data can be received as directed by the account docking specifications received by the processing system. For example, the docking specifications may allow the processing system to accept motion detection information associated with one or more devices associated with the SNET member's account, but the processing system may be restricted from accessing, receiving, or the like any video feed data from any of the devices associated with the SNET member's account. As shown in blocks 1278-1280, process 1270 can include determining whether access to data received from the device is authorized and, if access is authorized, permitting access to the data. Such a determination can be made as directed by one or more docking specifications associated with the account of the SNET user with which the device is associated. Access can include, without limitation, partial or full access to some or all of the data by a selected one or more SNET group members, nonmembers, or the like. For example, where one or more docking specifications permit only a certain selection of SNET group members selected by the SNET member to access the data, the processing system permits only those selected SNET group members to access the data. In some embodiments, access is subject to additional restrictions. For example, some or all of the received docking specifications may restrict access to received data by any permitted SNET group member to no more than a predetermined amount of time.

As shown in block 1282, process 1270 can include data monitoring, analyzing, processing, some combination thereof, or the like of data received. In some embodiments, a processing system processes data received from multiple SNET members, nonmembers, devices associated with members, devices associated with nonmembers, some combination thereof, or the like to determine trends, to track an event, or the like. For example, where a processing system has established an SNET group associated with one or more child abductions, and one or more SNET group members has set docking specifications that authorize the processing system to receive data from one or more devices associated with the SNET group members including, without limitation, camera devices, GPS location devices, some combination thereof, or the like, the processing system can store, process, analyze, and otherwise interact with received data to track persons, vehicles, or the like. As shown in block 1284, process 1270 can include transmitting an analysis of data. In some embodiments, a processing system that has identified a trend, person, vehicle, item, some combination thereof, or the like from interacting with received data responds to the identification by transmitting a notification. The notification can be transmitted to one or more SNET group members, one or more nonmembers, or the like. For example, where a processing system processes received data to identify a vehicle of interest in an abduction event, track a vehicle of interest, some combination thereof, or the like, the processing system can transmit a notification to a local authority service including, without limitation, an emergency dispatcher. The notification can include some or all of the data received, analysis of the data, or the like. The notification can also include an invitation to join the SNET group and access some or all of the information provided to the SNET group.

As shown in blocks 1286-1288, process 1270 can include determining whether one or more SNET group members, nonmembers, the processing system, or the like are authorized to access some or all of a device. The device can be associated with an account of an SNET member, nonmember, or the like. Access can include access to one or more functional elements associated with the device. Authorization to access some or all of the device can be determined by one or more received docking specifications. For example, a processing system may determine whether one or more SNET members is authorized to get GPS location information associated with a device supporting another SNET group member. Where one or more docking specifications permits access to the GPS location information, the processing system can route communications between the one or more SNET members and the device. The server may also provide information to the one or more SNET members to enable them to access the device independently of the processing system.

As shown in block 1290, process 1270 can include determining whether the docking specifications have changed. The docking specifications can be changed by being replaced, in part or in full, by new docking specifications, updated, altered, overwritten, or the like. The docking specifications can be changed by one or more SNET members, SNET nonmembers, SNET group members, SNET group nonmembers, the processing system, one or more devices associated with one or more SNET accounts, some combination thereof, and the like.

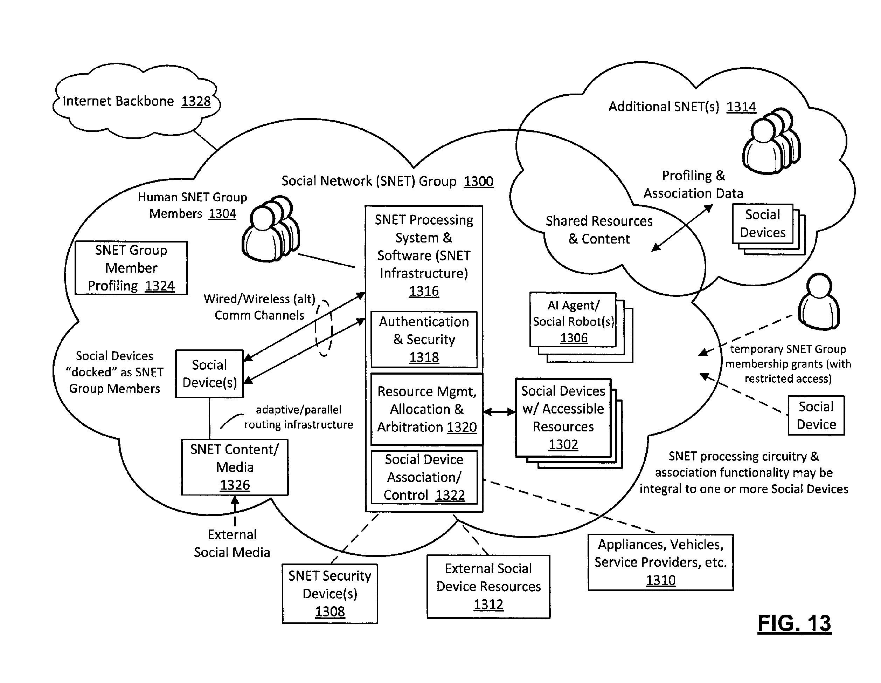

Referring now to FIG. 13, a social network circle/group 1300 (hereinafter "Social networking group", "social networking circle", "SNET circle", "SNET group", or the like) comprising social devices with 1302 is shown. Beyond traditional social networking features and services, an SNET group 1300 and associated social devices 1302 according to various embodiments include numerous novel features and attributes as described more fully below with general reference to the illustration.

Briefly, membership in the SNET group 1300 may comprise docked social devices 1302 with resources that are accessible to other members of the SNET group 1300 and human SNET group members 1304, as well as proxies thereof. Further, SNET group 1300 nodes may include device services and software (e.g., applications) of various types participating as members. By way of example, SNET group members might include artificial intelligence agents/social robots 1306, SNET security device(s) 1308, appliances, vehicles and service providers 1310, common or authorized members/functionality of other SNET groups 1312, etc. Further, access to specific content and resources of a SNET group 1300 may be shared with members of additional SNET(s) 1314, including remote or web-based applications. Such access can be conditioned on acceptable profiling and association data. Similarly, social devices, SNET groups, individuals, or the like may be granted temporary or ad hoc memberships, with or without restricted access.

In the illustrated embodiment, formation, maintenance and operation of SNET group 1300 is performed by one or more SNET processing systems and software 1316. A processing system can include, without limitation, one or more instances of standalone SNET processing circuitry, one or more instances of distributed SNET processing circuitry located on one or more devices, social devices, server devices, network nodes, and the like. It is noted that the "SNET processing circuitry" may comprise hardware, software, applications, or various combinations thereof, and be configurable to support various functionalities disclosed herein. Further, the SNET processing system 1316 may be included in a standalone server, server farm, cloud-based resources, and/or the various types of devices described below, and incorporate authentication and security functionality 1318. In addition, specialized middleware may also be utilized by SNETs according to various embodiments, including standardized middleware (or standardized communication protocols) with an associated certification process. Interactions and interdependencies within the SNET group 1300 may involve one or more of an adaptive resource management, allocation and arbitration module 1320, a social device association/control module 1322, and a SNET group member profiling module 1324 as described more fully below.

Distribution of internal and external SNET content/media 1326 can be accomplished in a variety of ways in accordance with various embodiments. For example, media distribution may involve an adaptive or parallel network routing infrastructure involving a wide variety of communication protocols and wired and/or wireless communications channels. SNET content/media 1326 may comprise, for example, various user-driven (advertising) channels, pictures, videos, links, online text, etc. Access to such content, as well as communications with and remote access to social devices 1302 of the SNET group 1300, may occur over an Internet backbone 1328, cellular communication system, WAN, LAN, etc.

A member of a SNET in accordance with various embodiments such as those disclosed herein may establish permissions and/or privacy settings that control and restrict who or what may access the member's profile(s) information, connections and groups, as well as define desired degrees of access. Permissions may enable the user to maintain certain information as private or available on a permissive basis only. For example, visibility of specified user information may be limited to users/devices in a SNET(s). Alternatively, specified user information may be publicly available. Likewise, a SNET member may selectively decide to permit others to access personal information such as name, gender, contact information/email address, etc.

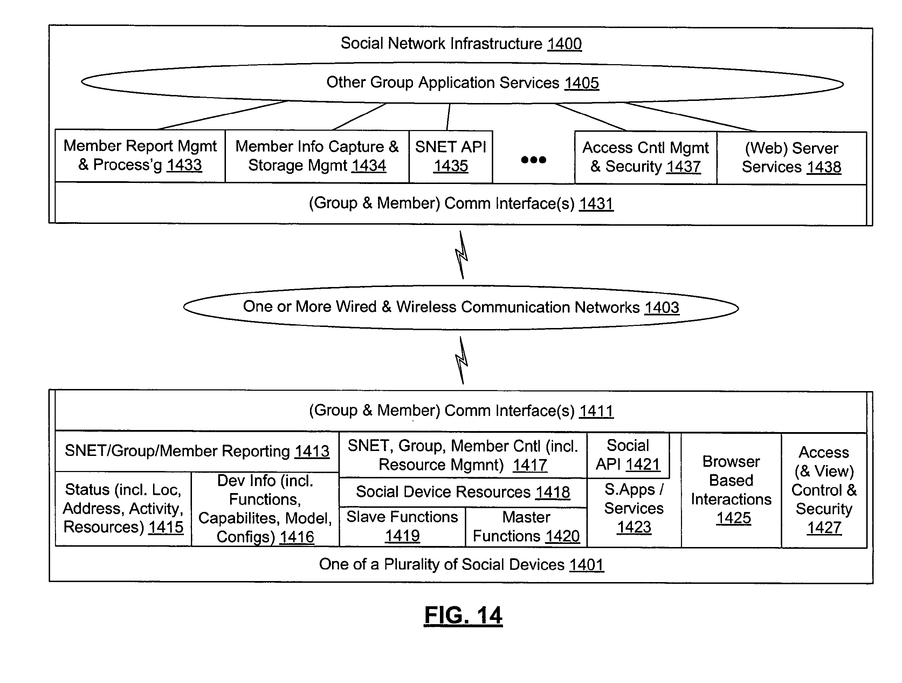

FIG. 14 is a functional block diagram illustrating a social network (SNET) infrastructure 1400 and (member) social device(s) 1401 in accordance with various embodiments. Communications between the social network infrastructure 1400 social device(s) 1401 and other SNET members may occur over one or more wired and wireless communication networks 1403. The SNET infrastructure 1400 and social device(s) 1400 are coupled to the communication networks 1403 by communication interface(s) 1431 and 1411, respectively, either of which may support communications with individual SNET members, groups of SNET members, or classes of SNET members.

The SNET infrastructure 1401 of the illustrated embodiment includes a number of functions and resources to support formation and maintenance of a SNET having social device members. In particular, member report management and processing 1433 receives information from SNET/group/member reporting functions 1413 in associated social devices 1400. Such information may include, for example, status data 1415 regarding the location, address and activities of a social device 1400 and/or device user.

In addition, the social device 1400 may provide device information 1416 indicating, for example, device functions and social capabilities, device model number(s), device configurations, software versions, attached peripherals and downstream (social) devices, device resources and usage, etc. Device information 1416 relating to available resources and current resource usage may be utilized by the SNET infrastructure 1401 for purposes of SNET resource management, including dynamic resource allocation and arbitration.

In various embodiments, the social device 1400 may have an obligation to gather, store and/or report device status/information 1415/1016 at different times. For example, reporting may be required upon affiliation or docking with a SNET, on a periodic basis, and/or during operational engagements with other intra- and inter-SNET resources and devices (including upstream and downstream devices).

Referring again to the SNET infrastructure 1401, additional functionality and resources include, without limitation: SNET member information capture and storage management 1434; a SNET application programming interface (API) 1435 that allows SNET associated software components to communicate with each other; access control management and security 1437 for maintaining the integrity of the SNET and affiliated data/resources; and (Web) server services 1438. The social network infrastructure 1401 further comprises other group application services 1405 corresponding to the foregoing, as well as additional services such as those described herein. In one exemplary embodiment, the SNET infrastructure 1401 might determine (e.g., by means of device information 1416) the category and nature of a social device 1400 wishing to participate in a SNET. As necessary, functionality in the SNET infrastructure 1401 could then direct or trigger installation of appropriate application software and underlying drivers in the social device 1400. Such operations might be performed with minimal involvement from inherent functions of the social device 1400.

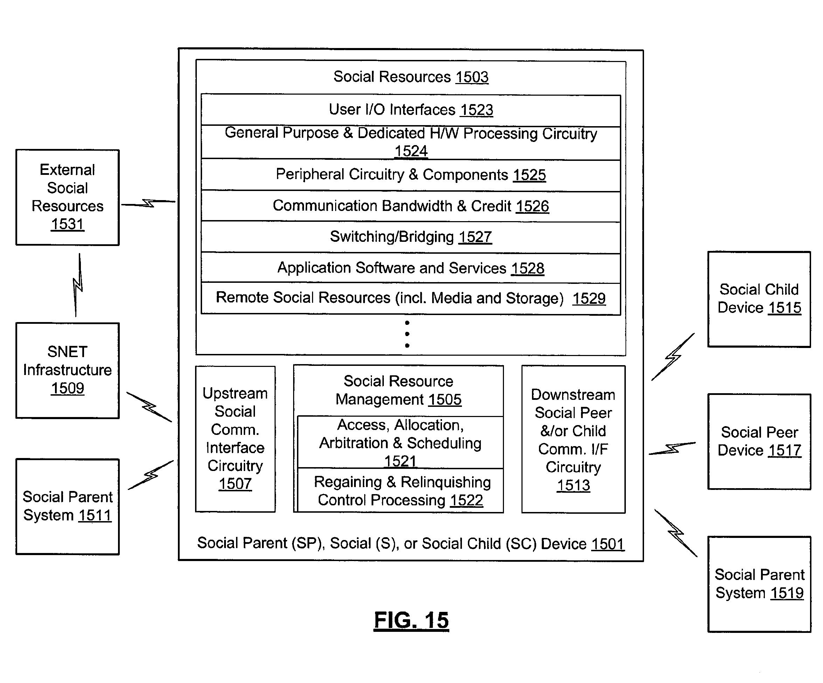

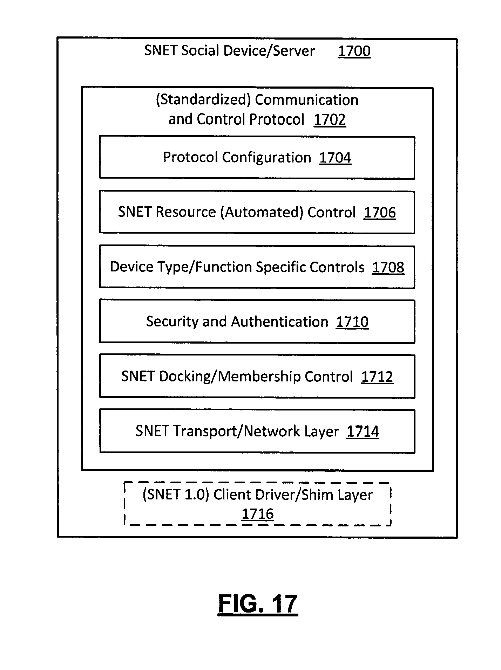

In the illustrated embodiment, the social device 1400 comprises a number of additional social device resources 1418 (including, for example, the social resources described in conjunction with FIGS. 15 and 17, as well as device status/information 1415/1016) and functions and resources to support participation in a social network. More particularly, SNET, SNET and/or member control functions 1417 may include slave functions 1419, master functions 1420, and various combinations thereof. Slave functions 1419 include, for example, device (re)configuration, directed resource allocation, managed resource arbitration, bridging operations, etc. Master functions 1420 enable the social device 1400 to establish, manage, and terminate various interactions between nodes or groups of nodes in a social network, including interactions involving the social device 1400 itself.

The social device 1400 further includes a social API 1421 and browser-based interaction capabilities 1425 to support, for example, relevant social applications and services 1423 (which might comprise slave and master functions 1419 and 1420). Access control (including access views provided to other SNET group members) and security 1427 layers permit the social device 1400 to interface with or establish secure SNET groups/circles and control access to internal and external SNET resources as described more fully below.

It is noted that numerous of the functional building blocks of the embodiment illustrated by FIG. 14 may be incorporated, in whole or part, in one or more (application specific) integrated circuit devices. For example, an integrated circuit device may comprise a member reporting module to provide member reporting functionality (including communication of device status and device characteristics), device control capabilities, master/slave functions, security and access control modules, etc. Such an integrated circuit device may also include onboard processing capabilities and/or interface with a processor device. Alternatively, several of the functions described above may be incorporated, in whole or part, into an operating system and/or software loaded above an operating system kernel.

Referring now to FIG. 15, a schematic block diagram is shown for a social device 1501 operable to support various resource access interactions with other social devices and social systems in accordance with various embodiments. The social device 1501 is configured with a variety of functions that enable it to operate in a social device "hierarchy" comprising social (S) devices, social "parent" (SP) devices and social "child" (SC) devices. For example, a social parent device may enable a docked social child device to access resources of the parent device and/or connect to and interact with (directly or indirectly) with a social network. The social child device may be configured with inherent social capabilities, or gain access to such capabilities from or through an associated parent device. Further, a human SNET member might have associated social child devices, or be served by a social parent device via a user I/O interface (1123).

A social device 1501 according to various embodiments and applications may also concurrently or selectively function as a social device, SP device, SC device, or even a "grandparent" device that supports (e.g., in a multi-hop environment) a parent device in a SNET group. Dynamic and static hierarchical associations between SP and SC devices may be established in a selective, automatic or automated manner. Further, a social device 1501 may take many forms including, without limitation, a smartphone, personal computer, server, tablet device, access point, gateway, network switch/hub, bridging device, set top box, or other device enabled with social capabilities.

In the illustrated embodiment, the social device 1501 is communicatively coupled to a SNET infrastructure 1509 and/or social parent system 1511 via upstream social communication interface circuitry 1507. Likewise, downstream social peer and/or child communication interface circuitry 1513 enables coupling with a social child device 1515, social peer device 1517 and/or social parent system (device) 1519. Social resources of both upstream and downstream devices may be accessible to one another via the social device 1501.

The social device 1501 of this embodiment includes social resources 1503 that, along with external SNET resources, are managed by a social resource management module 1505 and accessible to at least one other SNET group member. Specific social resources 1503 may include user I/O interfaces 1523, general purpose and dedicated hardware processing circuitry 1524, peripheral circuitry and components 1525 (which may or may not have social capabilities), communication bandwidth and credit determination functionality 1526, switching/bridging functions 1527, application software and services 1528, remote social resources 1529 of the SNET group, external social resources 1531 controlled by the social device 1501, etc. The external social resources 1531 may comprise, for example, an external media/digital library, or content from one or more of cable, satellite and/or terrestrial televisions systems.

Among other functions, the social resource management module 1505 comprises access, allocation, arbitration and scheduling functionality 1521, as well as the functionality for establishing, regaining and relinquishing control processing operations 1522, including operations involving access to social resources 1503. It is noted that counterpart social resource management functionality may be present in the SNET infrastructure 1509 and/or other SNET nodes.

In one exemplary embodiment wherein the social device 1501 comprises a switching bridge, bandwidth capacity may be dynamically allocated by access, allocation, arbitration, and scheduling functionality 1521. Access to bandwidth capacity and other resources of the social device 1501 might be available only upon request, per access views, or per allocation and arbitration functions, and selectively terminated when excessive bandwidth/resources are consumed or requested.

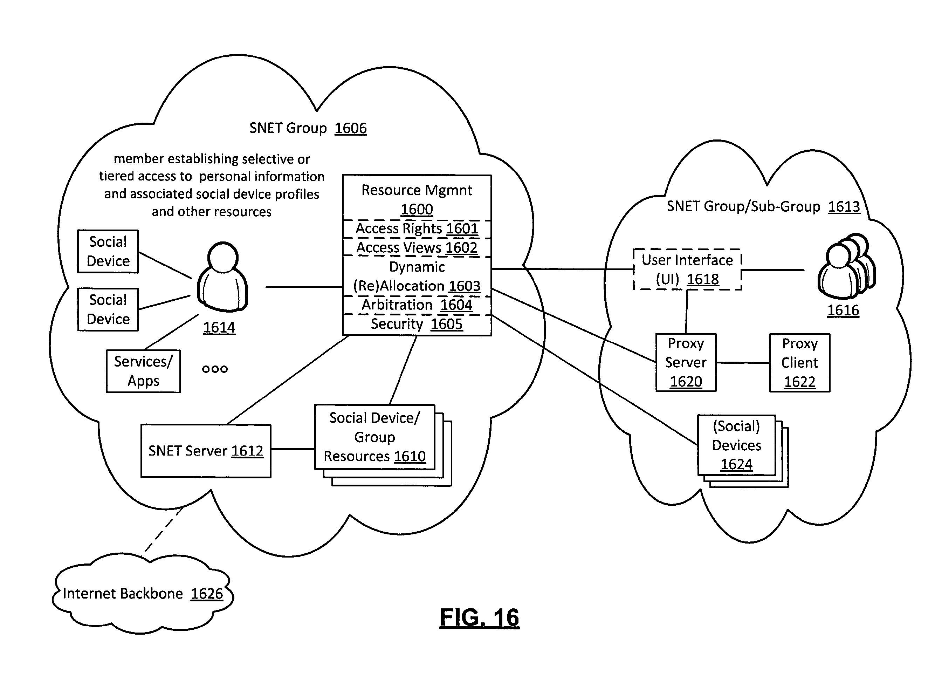

FIG. 16 is a schematic block diagram illustrating access to social resources of a SNET group 1606 in accordance with various embodiments. In some embodiments, a member of a social network group ("SNET group") controls different access levels to both personal information (which may be included in a user profile) and associated device profiles and capabilities. Such access rights allow the member to establish selective, restricted and/or tiered access rights and views - for other members of the social/group as well as non-members - to all or some of the member's social devices and resources.

In the illustrated embodiment, a member or device of a SNET group 1604/1606 (or, alternatively, an unaffiliated entity) accesses social device/group resources 1610 associated with the SNET group 1606 via a resource management node 1600. The resource management node 1600 comprises access rights 1601, access views 1602, dynamic (re)allocation functionality 1603, arbitration functionality 1604, and security functionality 1605.

In operation, the access rights 1601 and access views 1602 control differing access levels and access visibility for a member's personal information, device information, data, processing and storage capabilities, and other social resources. Access rights 1601 and access views 1602 can be predefined, for example, based on a SNET group, based on co-member devices, or based on member's own device to device interactions. Such predefinition can be tailored dynamically as needed or as relationships change. Access rights 1601 may also be expanded to support temporary interaction with a guest member or visitor device. For example, a visiting member with a smart phone may be permitted to receive/provide media to a social device residing in a "home group."

In some embodiments, a member of the SNET group 1606 can adjust and modify access rights 1601 on an information-by-information basis, device-by-device basis, member-by-member basis, etc. Through access views 1602, the member might also present itself in various ways depending on context, location, or use-based considerations. For example, a member icon/avatar may present differing characteristics or capabilities that are context dependent, including work, home or social settings. Allocation and, as necessary, dynamic reallocation of social resources is performed by dynamic (re)allocation functionality 1603 and arbitration functionality 1604. Access to social resources can be preconditioned on secure access/authentication performed by security functionality 1605.

In addition to social device/group resources 1610, the SNET group 1606 might include, for example, a SNET server 1612 and one or more members 1614 and affiliated social devices, services, applications, files, web pages, connections and other social resources. As will be appreciated, a member 1614, which can include, without limitation, a human member, device member, and the like, can establish selective or tiered access to personal information and associated social device profiles and other resources as described above. In certain embodiments, the resource management node 1600 may be incorporated in the SNET server 1612 or other SNET social device, or administered by a SNET hosting infrastructure, in a standalone manner, distributed manner, or the like. Further, the SNET server 1612 may include a firewall operable to provide secure access and perform basic routing functions.

Access to social device/circle resources 1610 by nodes of the SNET group 1613 may occur in a variety of ways, including via a user interface (UI) 1618 utilized by one or more humans 1616. The UI 1618 might comprise a graphical user interface (GUI) or browser that graphically indicates available resources, voice controls, gesture commands, etc. Access to the SNET group 1606 can also be managed by a proxy server 1620. The proxy server 1620 functions as an intermediary for access requests from proxy clients 1622 - including social devices connected to the proxy server 1620 via the Internet or other IP-based networks - seeking to communicate with the SNET group 1606. Social devices 1624 affiliated with a SNET 1613 may have the capacity to interact directly with the SNET group 1606. It is noted that the human members 1616, proxy server 1614 and social devices 1624 may operate independently of a SNET group/sub-group. Further, the proxy server 1614 may be a distributed or cloud-based entity, or a member of (or incorporated in a member of) either the SNET group/sub-group 1613 or SNET group 1606.

FIG. 17 is a schematic block diagram of a social device/server 1700 utilizing a communication and control protocol 1702 that enables various SNET resource and control operations in accordance with various embodiments. In the illustrated embodiment, the communication and control protocol 1702 comprises protocol configuration 1704, SNET resource (automated) control features 1706, device type/function specific controls 1708, security and authentication features 1710, SNET docking/membership control 1712, and a SNET transport/network layer 1714. Various packetization and encapsulation techniques may be utilized for communicating and receiving control signals and data.

In one embodiment, the social device/server 1700 includes a shim layer or client driver 1716 that enables communications with a central SNET management node, SNET infrastructure, one or more processing systems, SNET members and other compatible devices, including social devices that may not fully support a SNET group communication protocol, some combination thereof, or the like. The shim layer or client driver 1716 may be installed through a SNET node or local storage, or downloaded from a manufacturer website or cloud-based resource. Such installation may occur automatically upon power up or activation of the social device/server 1700 or as directed by other SNET nodes.

Management of and access to SNET resources utilizing the communication and control protocol 1702 may be performed by a central management node of a SNET group or SNET hosting infrastructure. The central management node may include integrated artificial intelligence and/or present itself through a "persona" or "avatar". In addition, distributed and delegated control mechanisms, including ad hoc or remote operations that span one or more SNETs, permit one member to interact with their own or another member's social devices via an SNET or SNET defined pathways.

In some embodiments, a standardized version of communication and control protocol 1702 - referred to herein as a "SNET 1.0" standard for sake of brevity - is employed to facilitate such SNET interactions (and possibly obviate the need for a shim layer in compliant social devices having defined device type characteristics). Various control operations according to an SNET 1.0 standard may include automated and ad hoc SNET group association, as well as support functions such as automated SNET resource offerings, automated device registration and configuration, upgrade and update maintenance, device-to-device communication session management, tunneling/encapsulation functions, proxy services, social resource allocation, etc. For example, through docking of an affiliated social device in a SNET group, a member may desire to access and control their own remote docked devices, as well as remote docked devices of other members, either directly or via a further user device. In some embodiments, such interaction may be facilitated through a SNET 1.0 compliant approach.

SNET 1.0 compliant devices may be designated as "SNET 1.0 Certified", for example, and provide both system-on-a-chip ("SoC")/hardware and software support peculiar to a particular device family. By way of example, a SNET 1.0 Certified NAS might have storage related, defined control capabilities that include default access tier definitions as described herein, security and DRM features, etc. Such control capabilities differ from, for example, a SNET 1.0 Certified STB (which might have multiple tuners/pipelines for delivering streaming video with certain tuners/pipelines reserved for the device owner according to a setup procedure). Social devices may be configured, manually or through factory-staged settings and security, to delegate membership control to a SNET (1.0) group/server for further applications such as those described below.

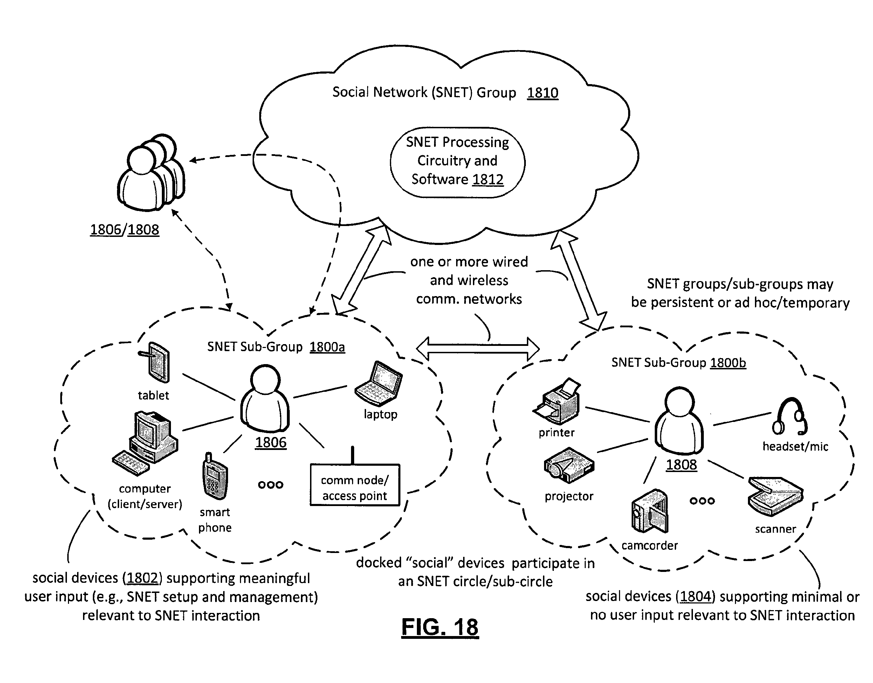

FIG. 18 illustrates various embodiments of social device membership and accessibility in social network groups/sub-groups in accordance with various embodiments of the disclosure. In some embodiments, membership in a SNET group 1810 may be extended to encompass public and private social devices and equipment. For example, in a SNET group 1810 that includes human members 1806/1808, each human member may have a respective personal SNET sub-group 1800(a)/1800(b) of associated or docked social devices 1806/1808 capable of independent or aggregated participation in the SNET group 1810. The SNET sub-group may be locally or remotely accessible by a human member 1806/1808 and/or other SNET group/sub-group members through various means, such as clicking on an icon or tag associated with the human member/personal sub-group.

Although SNET sub-groups 1800(a) and 1800(b) are illustrated as separate sub-groups, such sub-groups may instead comprise a single SNET group or sub-group, or any number of additional SNET groups, SNET sub-groups, or the like, each of which may include various combinations of social devices 1802/1804. Further, SNET processing circuitry and software 1812 of the illustrated embodiment manages formation and operation of the SNET group 1810. The SNET processing circuitry and software 1812 may be incorporated in a standalone server, social devices, and/or cloud-based resources. The SNET group 1810 may be persistent or of limited duration, and include ad hoc and/or static associations.

Social devices 1802/1804 may be broadly categorized as (i) social devices 1802 that include a user or SNET group interface sufficient to provide meaningful input to SNET interaction, (ii) social devices 1804 that support minimal or no user input relevant to SNET interaction, some combination thereof, or the like. More particularly and without limitation, the first category may include computers, tablet devices, IPTVs, IPTV set top boxes, smart phones, servers, laptops, cloudbooks, network attached storage devices, gaming consoles, media players/sources, communication nodes (access points, routers, switches, gateways, etc.), user interface devices, power line communication (PLC) devices, etc. Such social devices may receive user input for SNET setup and management. The second category may include, again without limitation, printers, projectors, cameras and camcorders, scanners, speakers, headsets, smoke detectors, alarm systems, video cameras, mice, etc. In general, dockable social devices include any electronic device that could be operably coupled to or docked in a SNET group/sub-group via wired or wireless pathways to participate as a SNET member.

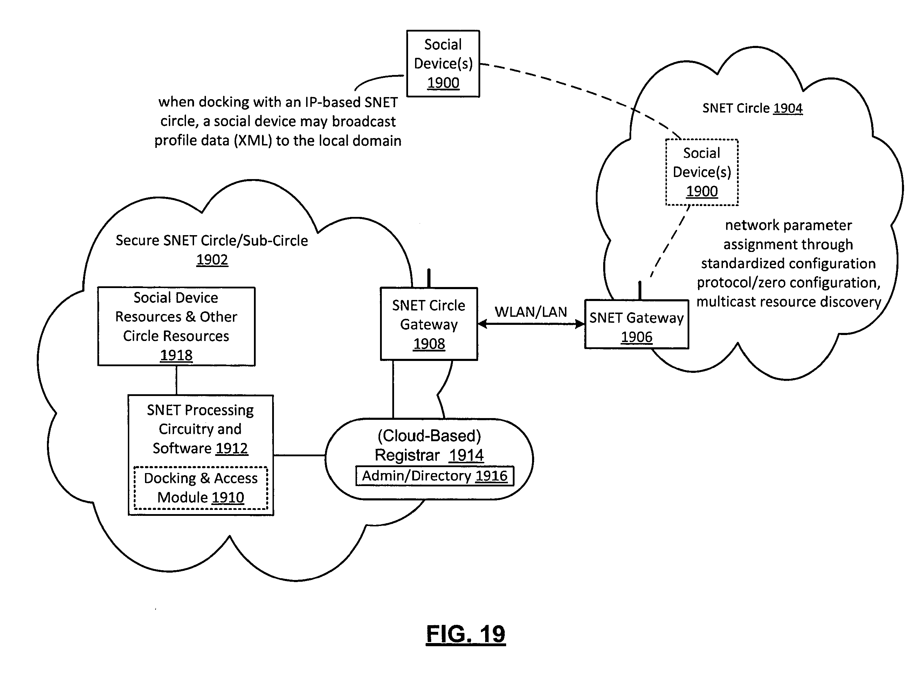

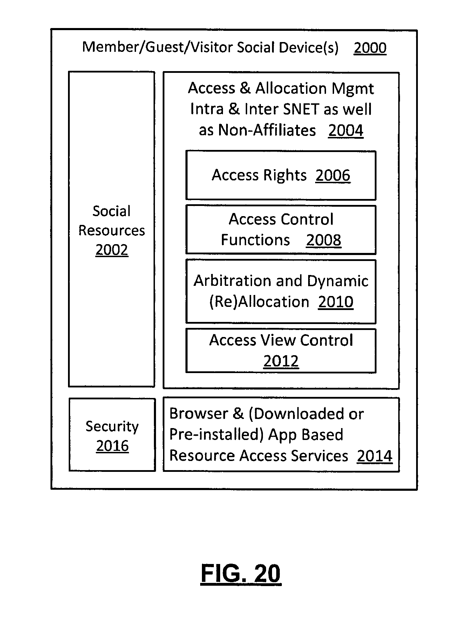

As will be appreciated, by docking social devices, members of a SNET group 1810 may gain full or partial remote control and interaction such devices via an authorized member SNET account. For example, family members authorized to participate in a "family" SNET group may remotely access docked social devices via one or more associated SNET accounts. Various embodiments for docking and accessing social devices are described more fully below, e.g., in conjunction with FIGS. 19 and 20.

FIG. 19 is a schematic block diagram illustrating remote access to social resources of a social network group/sub-group in accordance with various embodiments. In the illustrated embodiment, a social device 1900 may indicate a desire to associate, dock, access social device resources and other group resources 1918, or otherwise communicate with a (secure) SNET group/sub-group 1902. The social device 1900 device can be autonomous and independent or, alternatively, a participant in a second SNET group 1904 or other network serviced by the SNET gateway 1906.

In one embodiment, either the SNET gateway 1906 or SNET group gateway 1908 functions as a proxy for the social device 1900. Proxy functionality within the SNET gateway 1906 may be provided by a software application or a computer system (server) that functions as an intermediary for requests from clients (including connected social devices) seeking resources from other servers or gateways such as SNET gateway 1908. Such resources might include files, services, web pages, connections, profiling information and other available social device resources and other group resources 1918.

The SNET gateway 1906 may evaluate requests from social devices according to various filtering rules. For example, the SNET gateway 1906 might filter traffic by IP address or protocol. Once a request from the social device 1900 validated (if necessary), the SNET gateway 1906 connects to the SNET group gateway 1908 over a WLAN/LAN or other communication path and requests access to resources of the SNET group/sub-group 1902 on behalf of the social device 1900.

Membership in the SNET group/sub-group 1902 is established through a docking module 1910 of SNET processing circuitry and software 1912, which may support one or more device discovery and configuration protocols, including standardized protocols. When group membership is restricted, a local or cloud-based registrar 1914 can be employed to provide authentication. The registrar 1914 of the illustrated embodiment may utilize an administrator, or a directory service 1916 such as a Lightweight Directory Access Protocol (LDAP)-based directory server that stores attribute data. LDAP is a well-known application protocol for querying and modifying items in directory service. When docking with an IP-based SNET group, a social device may broadcast profile data to the local domain using a textual data format such as Extensible Markup Language (XML).

FIG. 20 is a schematic block diagram of an embodiment of a social device(s) 2000 comprising integral social resource access and allocation management functionality in accordance with various embodiments. The social device 2000 may operate as a member, guest member, and/or and authorized visitor of the SNET. Access to and allocation of social resources 2002 of the social device 2000 is controlled by (predefined or user-defined) access and allocation management functionality 2004, operation of which may apply to intra- and inter-SNET membership nodes, as well as interactions between the social resources 2002 and non-affiliated entities. Further, access and allocation management functionality 2004 may be distributed between one or more social devices/SNET hosting infrastructures.

The access and allocation management functionality 2004 comprises access rights 2006, access control functions 2008, arbitration and dynamic (re)allocation 2010, and access view control 2012. Exemplary operation of such functions is described in conjunction with various other Figures herein. Servicing of requests for access to social resources 2002 may be carried out, for example, via a browser and/or downloaded or preinstalled applications 2014. In certain embodiments, access to social resources 2002 is conditioned upon authentication or security operations 2016. In addition, various functional blocks of the social device 2000 may be incorporated into one or more integrated circuit devices, which may be dedicated to support a primary user and/or shared access operations.

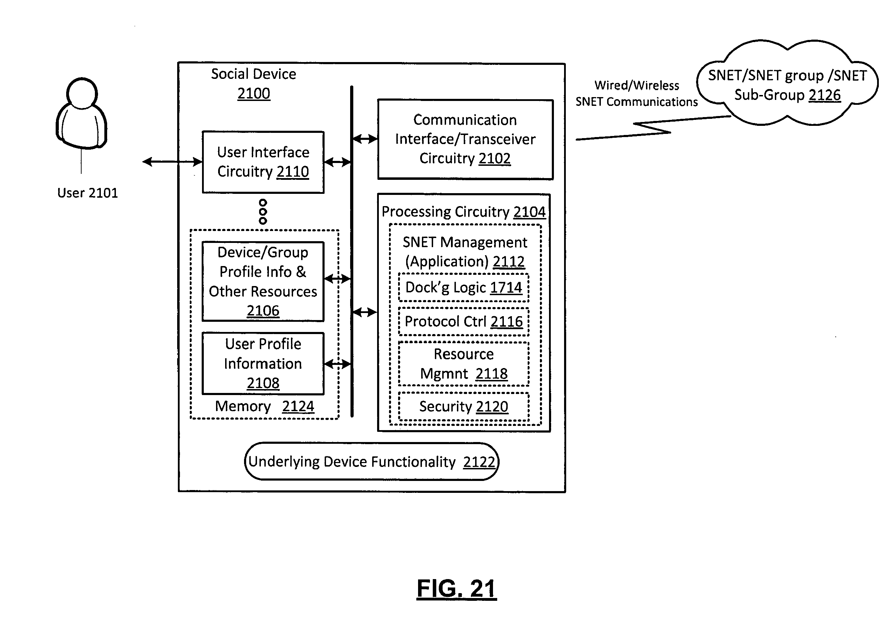

FIG. 21 is a schematic block diagram of an embodiment of a social device 2100 comprising integral functionality operable to support social network group/sub-group membership and communications in accordance with various embodiments of the disclosure. In the illustrated embodiment, a communication interface and transceiver circuitry 2102 is operable to perform wired or wireless communications between the social device 2100 and a SNET/SNET group/SNET sub-group 2126 over one or more communication channels. Depending on the capabilities and configuration of the social device 2100, communications with a SNET may be unilateral or bidirectional/interactive, and utilize either a proprietary or standardized communication protocol. Communications may include, for example, device profile information, user and SNET group profile information, control signals, media content, interactions with hosted service data, user data, relayed information, etc.

The social device 2100 further includes processing circuitry 2104 operable to process and manage communications, services and associations between the device and other entities including members of a SNET/SNET group/SNET sub-group 2124, third parties, software agents, etc. More particularly, the processing circuitry 2104 may include, for example, a software management application 2112 comprising one or more of docking logic 2114 (including support for device discovery and configuration protocols such as described below), communication protocol control 2116, resource management 2118, and security/authentication 2120 functionality.

The social device 2100 further may utilize profile information and other resources, that may take many forms and be maintained in static or dynamic memory 2124. Such profile information enables a social device and/or user 2101 to present an image of itself and its capabilities to other members of a SNET. In particular, device/group profile information and other resources 2106 and user profile information 2108 may be utilized in various ways in accordance with various embodiments to facilitate a variety of social interactions. Depending on the capabilities and requirements of a particular device (and other members of a SNET), a device or user profile may be static or dynamic.

In certain embodiments, the social device 2100 may interact with a user(s) 2101 via user interface circuitry 2110. User input to the social device 2100 may include, for example, data entry through a keypad, touchscreen, remote control device, gaming controller, device control buttons, voice or gesture commands, storage device, etc. Authorized access to or control of the social device 2100 can be facilitated through unique biometric identifiers, passwords, token-based identification, trusted authorities or documents such as a driver's license or passport, and like authentication means.

The social device 2100 may perform core or underlying functionality 2120. Alternatively, the social device may primarily function as a social networking interface or communication device, or be programmable to perform specific functions within a SNET group/sub-group.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "module", "processing circuit", and/or "processing unit" may be a single processing device or a plurality of processing devices. Such a processing device may be a microprocessor, microcontroller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may have an associated memory and/or an integrated memory element, which may be a single memory device, a plurality of memory devices, and/or embedded circuitry of the processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a functional block that is implemented via hardware to perform one or module functions such as the processing of one or more input signals to produce one or more output signals. The hardware that implements the module may itself operate in conjunction software, and/or firmware. As used herein, a module may contain one or more sub-modules that themselves are modules.
While particular combinations of various functions and features of the present invention have been expressly described herein, other combinations of these features and functions are likewise possible. The present invention is not limited by the particular examples disclosed herein and expressly incorporates these other combinations.

## Claims

1. A social networking system that supports interactions with a third-party monitoring service and at least a first human member, the social networking system comprising:
a management service that supports creation of a first social networking group, the management service supporting both a first docking process and a second docking process, the first docking process involving associating the first social networking group with a first device of the first human member, the second docking process involving associating the first social networking group with the third-party monitoring service; and
the management service supports a social pathway via the first social networking group through which the third-party monitoring service can receive data from the first device, and the monitoring service selectively triggering a support function in response to the data received, the support function involving an interaction with at least a first portion of the first device by the third-party monitoring service via the social pathway.

2. The social networking system of Claim 1, the support function involving a control of the first portion of the first device by the third-party monitoring service via the social pathway.

3. The social networking system of Claim 1, the support function involving the third-party monitoring service accessing status information from a first portion of the first device via the social pathway.

4. The social networking system of Claim 3, the support function involving providing at least some of the status information to a third-party device of a third party.

5. The social networking system of Claim 1, the social pathway is a direct point-to-point pathway between the third-party monitoring service and the first device.

6. The social networking system of Claim 1, the monitoring service selectively triggering a support function in response to determining that the data received correlates with a trigger threshold.

7. A monitoring system that supports a plurality of customers, the monitoring system comprising:
a first system that interacts with a social network in a first docking process to join at least a first social network group, the first social network group including a first human member and a first social device member of the first human member, the first human member being a first customer of the plurality of customers;
the first system receiving and evaluating communications from the first social device member via a first social pathway provided by the first social network group; and
the first system responds to the evaluation by selectively triggering a support function that involves an interaction with at least a first portion of the first social device member.

8. The monitoring system of Claim 7, the support function involving accessing status information from at least the first portion of the first social device member by the first system.

9. The monitoring system of Claim 7, the support function involving a control of at least the first portion of the first social device member by the first system.

10. The monitoring system of Claim 9, wherein:
the first social device includes an audiovisual interface; and
the support function involves a control of the audiovisual interface by the first system.

11. The monitoring system of Claim 8, the support function further involving providing the status information to at least one other customer of the plurality of customers.

12. The monitoring system of Claim 7, the first docking process including a verification of secure interactions between the first system and the first social device member via the first social pathway.

13. The monitoring system of Claim 8, the first system responding to the evaluation by selectively triggering a support function that involves interacting with a third party.

14. The monitoring system of Claim 13, the interacting with a third party including providing communications received by the first system from the first social device member to a third-party device supporting the third party.

15. A device that supports a member of a social networking system, the device comprising:
an interface operable to communicatively couple with the social networking system; and
processing circuitry interoperable with the interface to:
interact with the social networking system in a first docking process to dock the device to a first social networking group, the first social networking group including a third-party monitoring service member; and
deliver status information associated with a first portion of the device to the third-party monitoring service member via a social pathway provided by the first social network group.
